(19) Europäisches Patentamt
European Patent Office
Office européen des brevets

(11) **EP 4 646 611 B1**

(12) **EUROPEAN PATENT SPECIFICATION**

(45) Date of publication and mention of the grant of the patent:
**17.06.2026 Bulletin 2026/25**

(21) Application number: **24821996.6**

(22) Date of filing: **08.11.2024**

(51) International Patent Classification (IPC):
**G01S 7/4865** (2020.01)     **G01S 17/10** (2020.01)

(52) Cooperative Patent Classification (CPC):
**G01S 17/10; G01S 7/4865**

(86) International application number:
**PCT/JP2024/080197**

(87) International publication number:
**WO 2025/191985 (18.09.2025 Gazette 2025/38)**

(54) **SYSTEMS AND METHODS FOR TRACKING OBJECTS BEYOND THE UNAMBIGUOUS RANGE**

SYSTEME UND VERFAHREN ZUR VERFOLGUNG VON OBJEKTEN ÜBER DEN EINDEUTIGEN BEREICH HINWEG

SYSTÈMES ET PROCÉDÉS DE SUIVI D'OBJETS AU-DELÀ DE LA PLAGE NON AMBIGUË

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.03.2024 US 202418602560**

(43) Date of publication of application:
**12.11.2025 Bulletin 2025/46**

(73) Proprietor: **MITSUBISHI ELECTRIC CORPORATION**
**Chiyoda-ku**
**Tokyo 100-8310 (JP)**

(72) Inventors:
• **RAPP, Joshua**
  **Cambridge, Massachusetts 02139-1955 (US)**
• **FERNANDEZ MENDUINA, Samuel**
  **Cambridge, Massachusetts 02139-1955 (US)**
• **MANSOUR, Hassan**
  **Cambridge, Massachusetts 02139-1955 (US)**
• **GREIFF, Marcus**
  **Cambridge, Massachusetts 02139-1955 (US)**
• **BOUFOUNOS, Petros**
  **Cambridge, Massachusetts 02139-1955 (US)**
• **PARSONS, Kieran**
  **Cambridge, Massachusetts 02139-1955 (US)**

(74) Representative: **Pfenning, Meinig & Partner mbB**
**Patent- und Rechtsanwälte**
**Theresienhöhe 11a**
**80339 München (DE)**

(56) References cited:
**US-A1- 2017 329 013     US-A1- 2020 284 908**

• **GYONGY ISTVAN ET AL: "Direct Time-of-Flight Single-Photon Imaging", IEEE TRANSACTIONS ON ELECTRON DEVICES, IEEE, USA, vol. 69, no. 6, 14 December 2021 (2021-12-14), pages 2794 - 2805, XP011909027, ISSN: 0018-9383, [retrieved on 20211214], DOI: 10.1109/TED.2021.3131430**
• **FERNANDEZ-MENDUINA S ET AL: "Tracking Beyond the Unambiguous Range with Modulo Single-Photon Lidar", ICASSP 2024 - 2024 IEEE INTERNATIONAL CONFERENCE ON ACOUSTICS, SPEECH AND SIGNAL PROCESSING (ICASSP), IEEE, 14 April 2024 (2024-04-14), pages 6 - 10, XP034654147, DOI: 10.1109/ICASSP48485.2024.10446835**

**Description**

[Technical Field]

The present disclosure relates generally to object detection in a scene, and more particularly, to Single-Photon LiDAR based devices and methods for tracking an object beyond the unambiguous range of the LiDAR, and more specifically to a system for tracking positions of a target object, a method for tracking positions of a target object, and a non-transitory computer-readable medium.

[Background Art]

US 2020/284908 A1 describes a lidar system including a light source configured to emit multiple optical signals directed into a field of regard of the lidar system.

GYONGY ISTVAN ET AL: "Direct Time-of-Flight Single-Photon Imaging", IEEE TRANSACTIONS ON ELECTRON DEVICES, IEEE, USA, vol. 69, no. 6, 14 December 2021 (2021-12-14), pages 2794-2805, ISSN: 0018-9383, DOI: 10.1109/TED.2021.3131430 provides a tutorial introduction to the direct Time-of-Flight signal chain and typical artifacts introduced due to detector and processing electronic limitations.

US 2017/329013 A1 provides a laser detection and ranging system.

FERNANDEZ-MENDUINA S ET AL: "Tracking Beyond the Unambiguous Range with Modulo Single-Photon Lidar", ICASSP 2024 - 2024 IEEE INTERNATIONAL CONFERENCE ON ACOUSTICS, SPEECH AND SIGNAL PROCESSING (ICASSP), IEEE, 14 April 2024 (2024-04-14), pages 6-10, DOI: 10.1109/ICASSP48485.2024.10446835 discloses a method to denoise and interpolate samples that leverages the scenario where the oversampling factor is high.

Object detection and tracking is an essential component of many real-world applications. Several application areas such as autonomous vehicles, industrial robotics, navigation, aerospace, meteorological element measurement, atmospheric environment monitoring etc. require precise detection and/or tracking of objects for performing critical functions. There are several approaches of varying complexities and accuracy available for tracking objects in a scene. Image processing-based approaches are suitable for object tracking in a short range but are limited by illumination requirements. On the other hand, remote sensing approaches are suitable for tracking distant objects without relying on the received signal's intensity or other parameters. For example, radar-based approaches simply rely on reception of reflections without getting into the complexities of processing those reflected signals. In this regard, time-of-flight of the signals is considered sufficient to measure the distance to an object.

Time-of-flight (ToF) distance sensing is a technology that measures the time it takes for signals to travel from a source to a target and back. This technology is commonly used for distance measurement in various applications, including camera autofocus, gesture recognition, robotics, augmented and virtual reality, as well as in autonomous driving. ToF sensors typically use low frequency illumination such as infrared light as a source. The sensor emits short pulses of infrared light towards the target. The emitted light reflects off the target surface and travels back to the sensor. The sensor measures the time it takes for the light to make this round trip. Using the known speed of light, the sensor calculates the distance to the target by multiplying the time of flight by the speed of light and dividing it by two since the light travels to the target and back.

Reliable object detection is usually performed using remote sensing techniques such as Light Detection and Ranging (LiDAR or simply Lidar) that uses light in the form of a pulsed laser to measure ranges (distances) to objects in a scene. Lidars can also be used to generate precise, three-dimensional information about the shape and characteristics of objects in its field of view. Several types of Lidars are available as of today for use in range estimation for such objects in a scene of interest. There are different types of Lidar systems varying in their applications and components. An advanced type of Lidar is a Single-Photon Lidar (SPL), also known as Geiger-mode Lidar, that leverages the properties of single-photon detectors for depth sensing and three-dimensional (3D) mapping. It differs from traditional lidar systems by using sensors capable of detecting individual photons, providing high sensitivity and precision. Various Lidar systems rely on principles of pulse emissions. SPL operates on the same fundamental lidar principles but employs single-photon detectors, typically Single-Photon Avalanche Diodes (SPADs). The lidar system emits laser pulses toward the target, and the SPAD detectors measure the time it takes for individual photons to travel to the target and back.

However, the pulse emissions have their limitations in the context of ToF distance sensing. The illumination period, i.e., the time between pulses during the pulse emission, sets a maximum time-of-flight that can be measured unambiguously. To measure distance over a range longer than this maximum unambiguous range, the pulse period can be increased, but that decreases the rate of light detection. Several methods exist for avoiding this unambiguous range, including non-periodic pulse sequences or multiple repetition periods. However, the use of non-periodic pulse sequences or multiple repetition rates requires more complex illumination hardware and reduces the rate of photon detection.

Consequently, the existing ToF distance sensing solutions are not effective for tracking objects, especially at high speed, without additional hardware that maximizes the utilization of emitted and absorbed light pulses. To that end, there is still a need to improve the ToF distance sensing technology utilizing pulse emission sensing.

[Summary of Invention]

It is an object of some embodiments to provide improved techniques for determining ranges of objects in a scene of interest. In this regard, it is also an object of some embodiments to provide systems and methods for performing range estimation of objects beyond the usual unambiguous range of the sensing technology being used. That is, some example embodiments are specifically directed towards providing object tracking techniques for scenarios where the maximum distance to be measured is greater than the unambiguous range of the underlying sensing system. Some example embodiments aim to perform the range estimation without requiring additional hardware. In this regard, some embodiments are directed towards maximizing the utilization of transmitted and received illumination pulses. Towards this end, some example embodiments complement the existing frameworks for range estimation with modulo-sensing based systems and methods without incurring depreciation in any other performance characteristics of such frameworks.

The subject matter of the present invention is defined by the appended claims. Further embodiments not covered by the claims are provided for background information to promote a deeper understanding of the invention. The unambiguous range for a remote sensing system is the maximum range at which a target can be located so as to guarantee that the reflected signal/pulse from that target corresponds to the most recent transmitted pulse. In most sensing systems, such as those based on single photon lidar (SPL) technology, the illumination pulse repetition rate sets the maximum distance that can be recovered unambiguously. Some embodiments realize that one way to extend the maximum recordable depth can be by reducing the pulse repetition rate (i.e., increase the time between transmission of successive pulses). However, it is also a realization of several embodiments that the slower acquisition speed limits the number of received/detected photons, which may be insufficient for many critical applications such as for tracking moving objects.

Some embodiments are based on the realization that range ambiguity in ToF-based object tracking techniques mainly stems from the assumption that the most recent measurement (photon detection) corresponds to the most recent transmitted pulse. Specifically, light detection times are measured with respect to the most recent pulse emission time, which enables direct time-of-flight depth imaging from as little as one photon per scene pixel. However, if the target is outside of the unambiguous range, the most recent measurements may not be aligned with the most recent pulse transmission. Attempts to mitigate this by decreasing the pulse repetition rate causes a tradeoff: a higher repetition rate results in more light detections but decreases the depth range that can be measured unambiguously. Some embodiments realize that such a trade-off becomes critical in tracking applications such as autonomous driving that require both a high frame rate and long-distance tracking capability.

Some example embodiments are based on the realization that pulsed ToF measurements operate as modulo sensing systems. While "modulo" refers to the modulus operation where the remainder is calculated when one number is divided by another, in the context of depth sensing, modulo sensing calculates the remainder of the time measured with respect to the most recent illumination time. As a result, the modulo sensing ignores the absolute times of photon detection and wraps measured distance values within a specific range, providing cyclical or repeating behavior. Given some constraints on the type of signal, mathematical theory has been established to guarantee recovery of signals from only the modulo measurements of the signals. Even when the conditions of the theory are not met exactly, some embodiments recognize that it may be possible to recover the unambiguous trajectory of a moving target from only the modulo (i.e., ambiguous) measurements.

Some embodiments are also based on recognizing that treating the ToF measurements as modulo samples overcomes the unambiguous range problem thereby allowing the use of frequent pulse repetitions to track a target object over a long distance. However, some embodiments also recognize that modulo sensing creates another problem of the need to unwrap the modulo distance measurements in the applications allowing discontinuous wrapping. Accordingly, some embodiments are based on realizing that the discontinuity can be addressed during the unwrapping by constraining the unwrapped distance measurements to lie on a continuous trajectory. Thus, some embodiments leverage the smoothness of typical trajectories to achieve long range tracking of objects beyond the unambiguous range.

It is a realization of some embodiments that some sensing systems such as SPL acquire modulo time-of-flight measurements naturally. However, after experiments it is a realization of some embodiments that such systems based on SPL introduce some challenges-including random sampling times, multiple noise sources, and absolute distance uncertainty-that are not addressed by the current modulo sensing techniques. Specifically, with modulo SPL measurements, the samples of the trajectory are non-uniformly spaced in time. Also, not all samples are informative due to ambient light, and informative samples may themselves be noisy. Furthermore, modulo sensing methods unwrap sequences up to a constant ambiguity equal to an integer multiple of the modulo threshold.

To address these challenges, some embodiments provide interpolation and denoising techniques that operate directly over the modulo samples, allowing recovery of uniform, denoised modulo samples of the trajectory for use with existing unwrapping methods. According to some embodiments, the uncertainty in the absolute distance to an object is removed based on the changing reflectivity fall-off. Particularly, the absolute target position is recovered by finding the global offset that best fits the inverse-squared falloff of reflectivity with distance.

Accordingly, several embodiments are directed towards achieving precise estimation of distance to an object in a scene even when the object is positioned beyond the unambiguous range of the underlying sensing system. Example embodiments described herein are applicable in scenarios with extremely low signal to background ratios and with fast moving objects. Thus, the framework proposed by several embodiments can be integrated into conventional range estimation methods without requiring any special hardware or modification to the existing architecture of such conventional systems.

In order to achieve the aforementioned objectives and advantages, some example embodiments provide systems, methods, and programs for tracking positions of a target object.

For example, some example embodiments provide a system for tracking positions of a target object. The system comprises circuitry configured to control an illumination source to periodically emit illumination pulses for illuminating the target object. The circuitry is also configured to detect illumination reflected from the target object to estimate a sequence of modulo distances to the target object wrapped by a pulse repetition period and unwrap the sequence of modulo distances subject to one or more continuity constraints to output a continuous trajectory of the target object.

According to some embodiments, the circuitry comprises the illumination source for illuminating the target object, one or more sensors to detect the reflected illumination from the target object, and a computer to perform the unwrapping and output the continuous trajectory of the object.

According to some embodiments, the sequence of modulo distances forms a discontinuous trajectory that is not differentiable at least at one instance of time, while the continuous trajectory of the target object is differentiable at all instances of time. In some embodiments, the circuitry is further configured to recover unwrapped depth estimates at each measurement time from modulo depth measurements, based on the continuous trajectory of the target object.

According to some embodiments, the unwrapping of the sequence of modulo distances may be performed by any of a first-order difference phase unwrapping algorithm, a convex optimization algorithm, or an extended Kalman filter that estimates the continuous trajectory from the modulo distances.

According to some embodiments, the continuous trajectory of the target object defines a change of distances of the target object with respect to the illumination source. The circuitry may be further configured to determine an offset for shifting the continuous trajectory of the target object to produce a shifted continuous trajectory tracking absolute distances of the target object with respect to the illumination source. According to some embodiments, the offset may be determined from prior knowledge of the absolute position of the target object at one or more times during the trajectory. According to some embodiments, the offset may be determined by selecting an offset that causes the best fit between the absolute trajectory and the change in the reflectivity over the course of the trajectory.

Some example embodiments also provide a method for tracking positions of a target object. The method comprises controlling an illumination source to periodically emit illumination pulses for illuminating the target object and detecting illumination reflected from the target object to estimate a sequence of modulo distances to the target object wrapped by a pulse repetition period. The method further comprises unwrapping the sequence of modulo distances subject to one or more continuity constraints to output a continuous trajectory of the target object.

Some example embodiments also provide a non-transitory computer readable medium having stored thereon instructions executable by a computer for performing a method for tracking positions of a target object. The method comprises controlling an illumination source to periodically emit illumination pulses for illuminating the target object and detecting illumination reflected from the target object to estimate a sequence of modulo distances to the target object wrapped by a pulse repetition period. The method further comprises unwrapping the sequence of modulo distances subject to one or more continuity constraints to output a continuous trajectory of the target object.

The presently disclosed embodiments will be further explained with reference to the following drawings. The drawings shown are not necessarily to scale, with emphasis instead generally being placed upon illustrating the principles of the presently disclosed embodiments.

[Brief Description of Drawings]

[FIG. 1A]

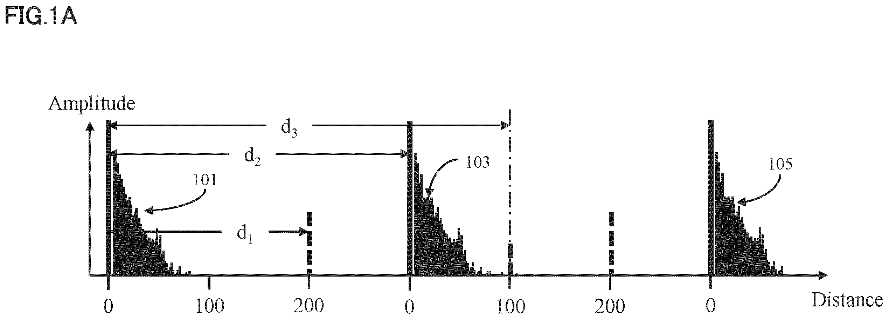

FIG. 1A illustrates a pulse diagram showing ambiguity in range estimation, according to some example embodiments;
[FIG. 1B]

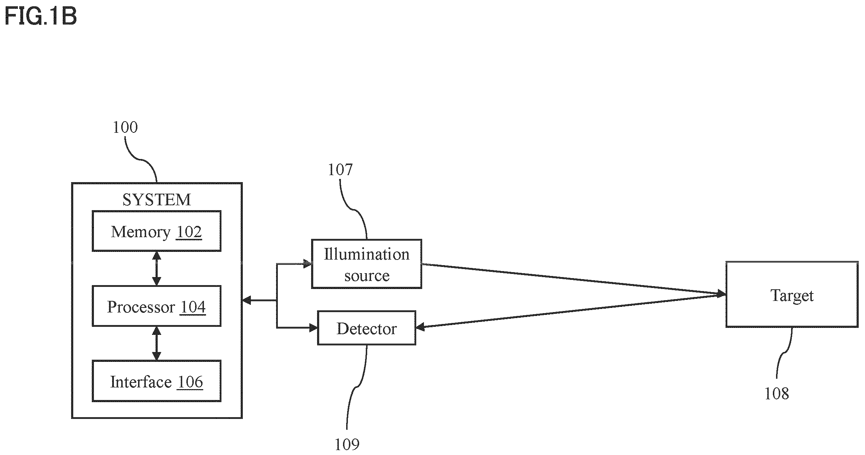

FIG. 1B illustrates a schematic of a system for tracking positions of a target, according to some example embodiments;
[FIG. 1C]

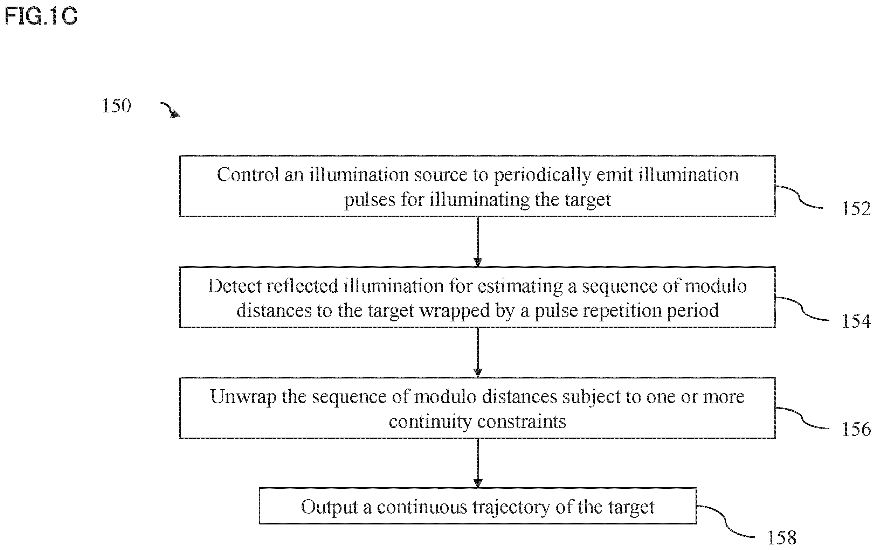

FIG. 1C illustrates a method executed by the system of FIG. 1B for tracking positions of an object, according to some example embodiments;

[FIG. 2A]

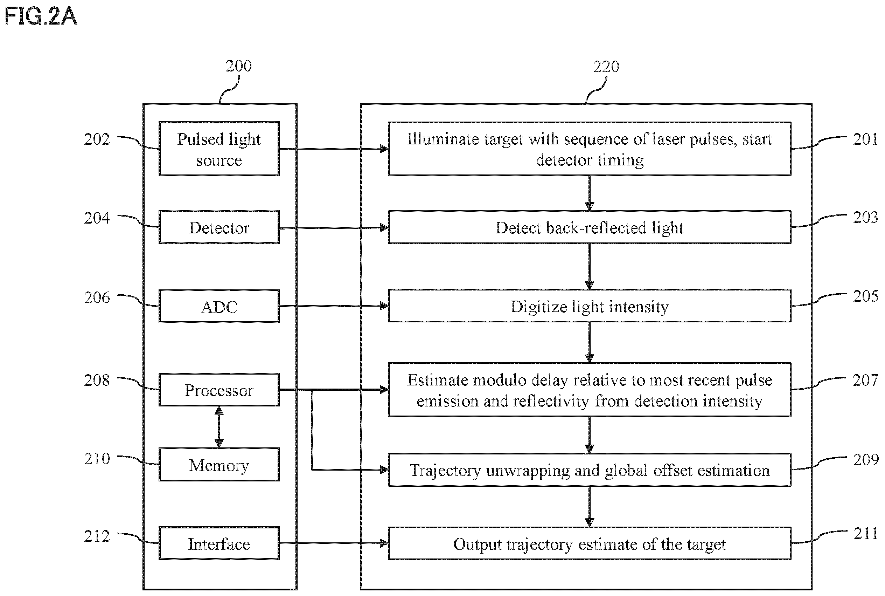

FIG. 2A shows a framework for absolute depth measurement of a target trajectory beyond the unambiguous range of a pulsed time-of-flight lidar system, according to some example embodiments;
[FIG. 2B]

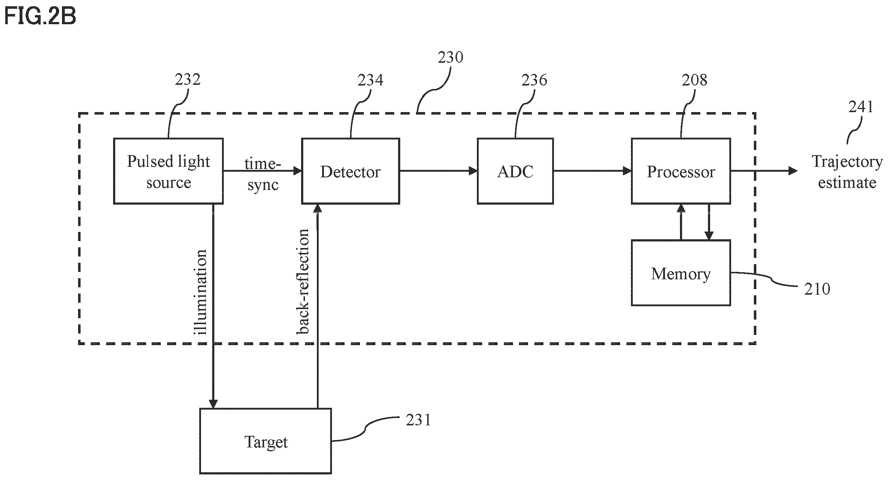

FIG. 2B shows a schematic of a pulsed time-of-flight lidar system for producing modulo measurements, according to some example embodiments;
[FIG. 2C]

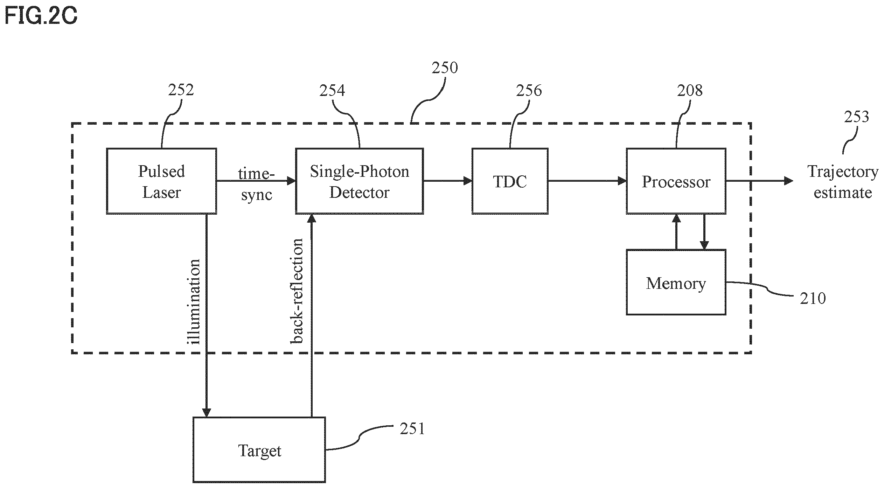

FIG. 2C shows a schematic of a pulsed single-photon lidar system for producing modulo measurements, according to some example embodiments;
[FIG. 3]

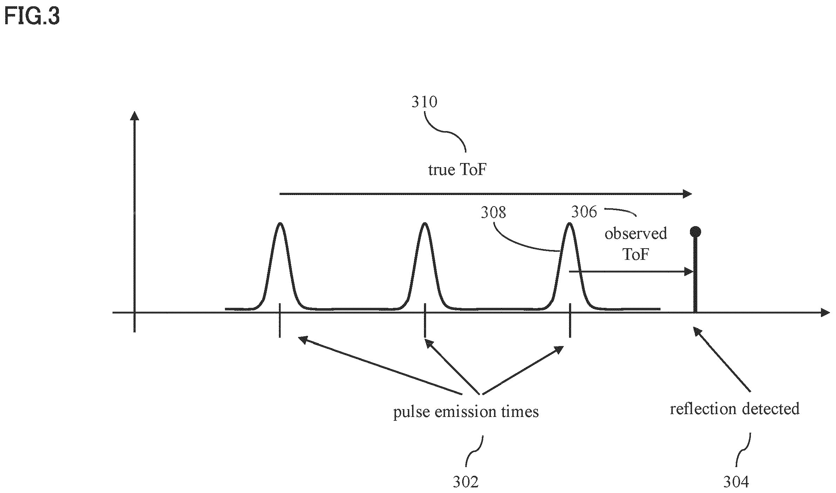

FIG. 3 illustrates a timing diagram showing relationship between maximum unambiguous range and time between pulses in a pulsed time-of-flight lidar system, according to some example embodiments;
[FIG. 4A]

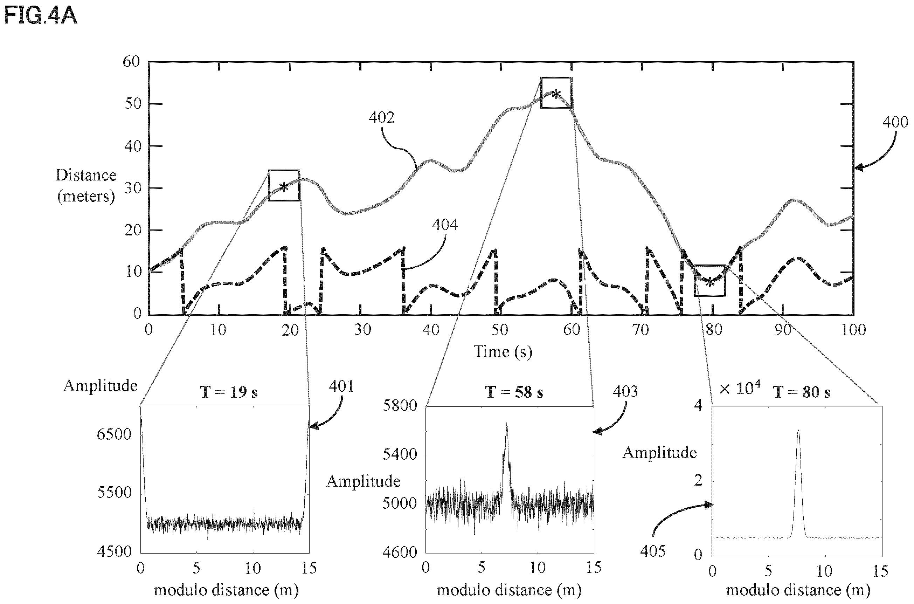

FIG. 4A depicts an example target trajectory, the corresponding modulo measurements, and the raw data used to make the modulo measurements in a pulsed time-of-flight lidar system, according to some example embodiments;
[FIG. 4B]

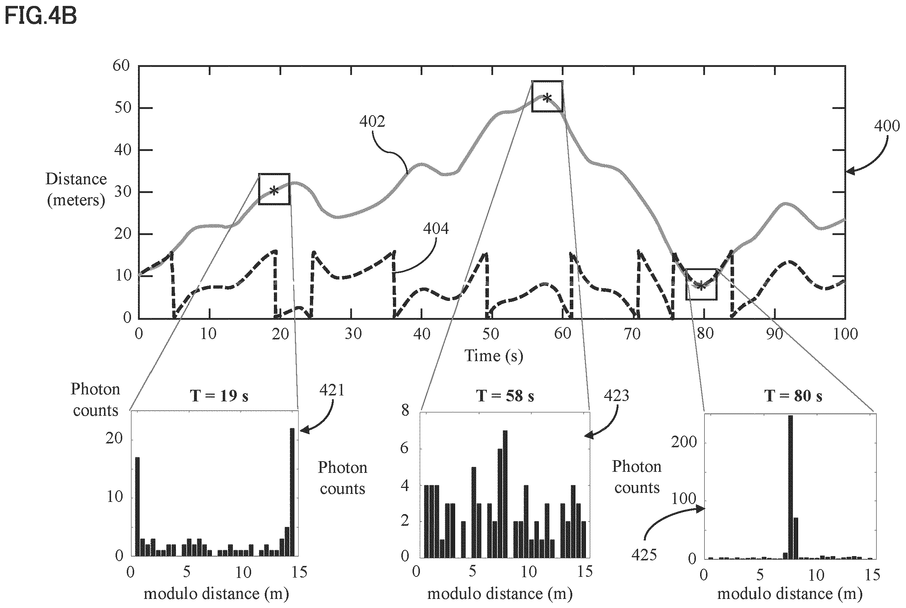

FIG. 4B depicts an example target trajectory, the corresponding modulo measurements, and the raw data used to make the modulo measurements in a pulsed single photon lidar system, according to some example embodiments;
[FIG. 4C]

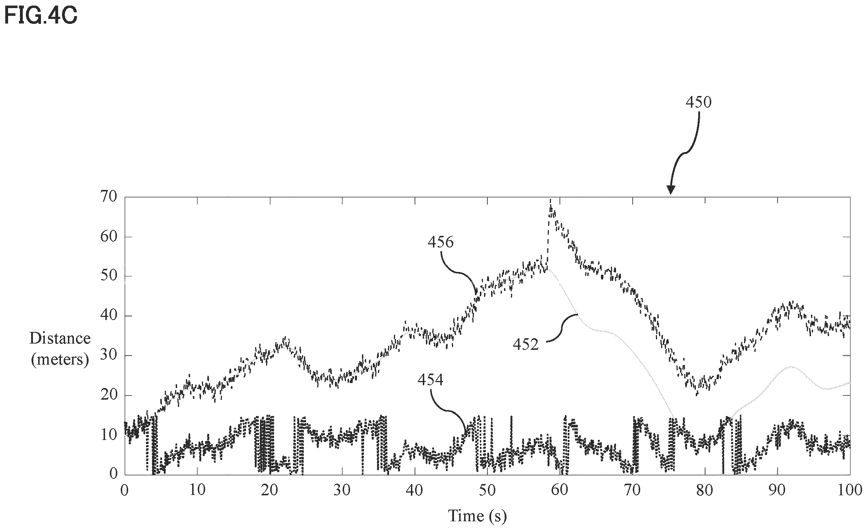

FIG. 4C illustrates the sensitivity of unwrapping to noisy modulo measurements, according to some example embodiments;
[FIG. 4D]

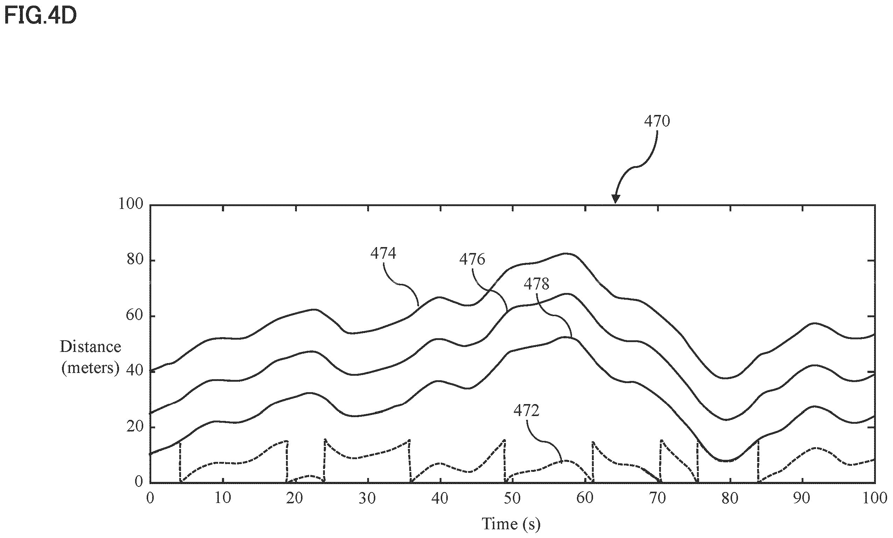

FIG. 4D illustrates the global offset ambiguity that remains after unwrapping modulo measurements, according to some example embodiments;
[FIG. 5A]

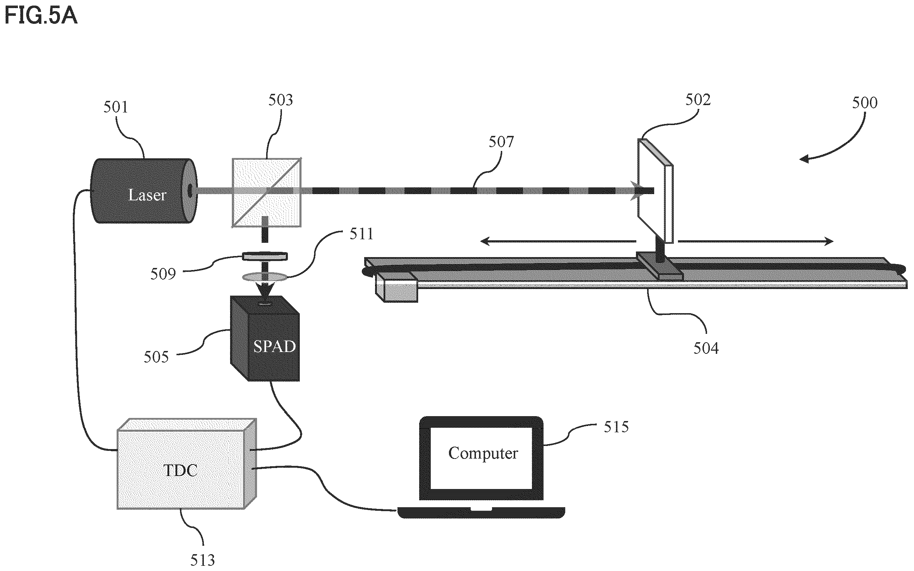

FIG. 5A shows a detailed schematic of a single-photon lidar system for producing modulo measurements of a moving target, according to some example embodiments;
[FIG. 5B]

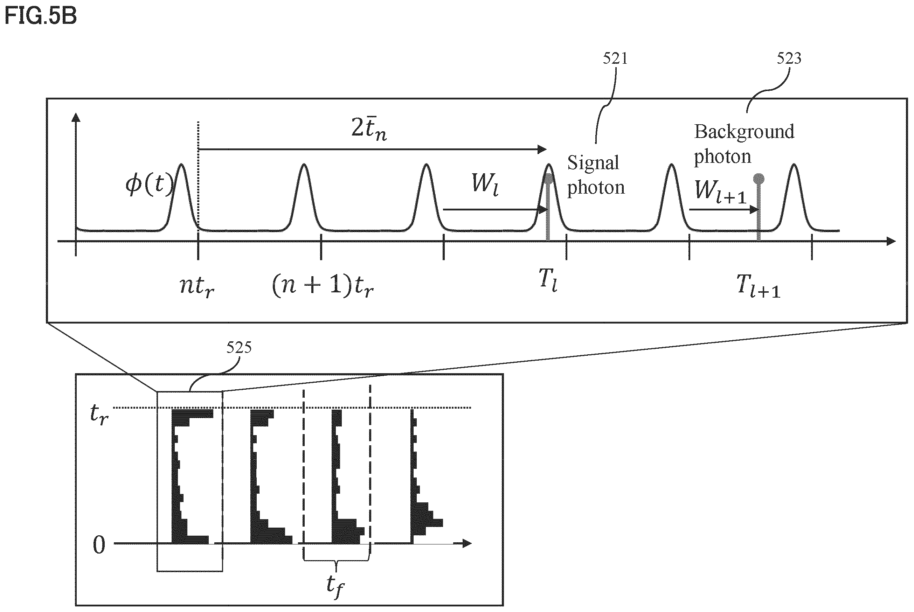

FIG. 5B depicts a model of the photon detection process for modulo single-photon lidar, according to some example embodiments;
[FIG. 5C]

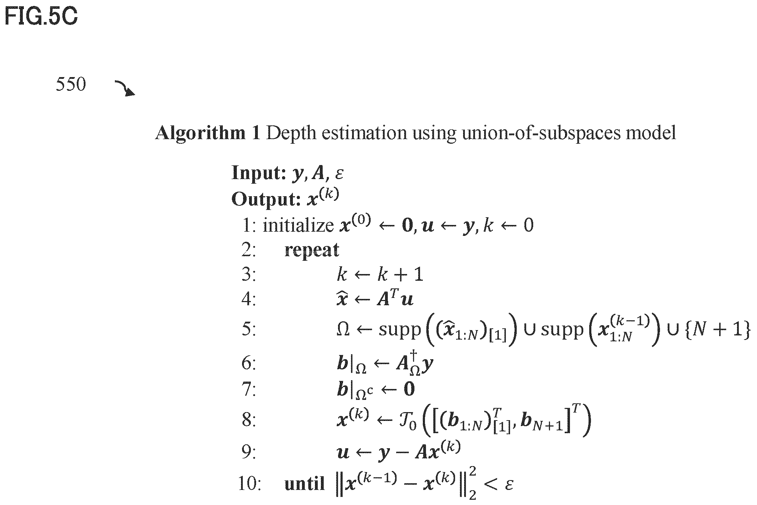

FIG. 5C illustrates the workflow for an algorithm estimating the depth and reflectivity from single-photon detections using a union-of-subspaces model, according to some example embodiments;
[FIG. 6]

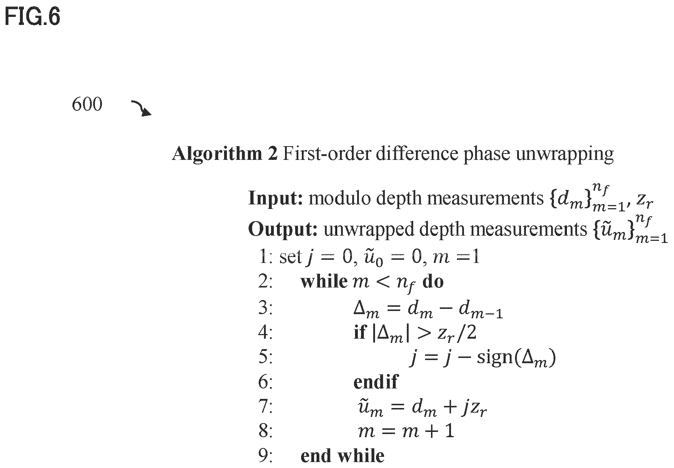

FIG. 6 illustrates the workflow of a first-order difference phase unwrapping algorithm utilized for unwrapping a sequence of modulo distances estimated by the system of FIG. 5A, according to some example embodiments;
[FIG. 7]

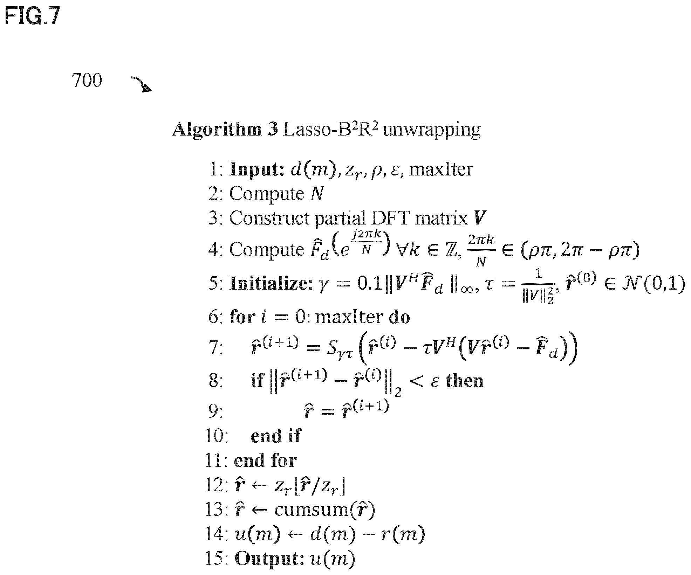

FIG. 7 illustrates the workflow of a convex optimization algorithm utilized for unwrapping a sequence of modulo distances estimated by the system of FIG. 5A, according to some example embodiments;
[FIG. 8]

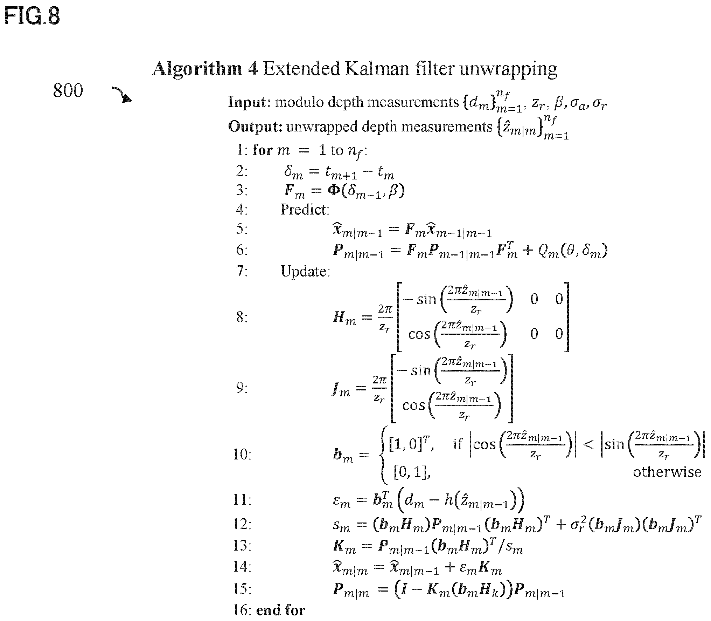

FIG. 8 illustrates the workflow utilized for unwrapping a sequence of modulo distances using an extended Kalman filter, according to some example embodiments;
[FIG. 9]

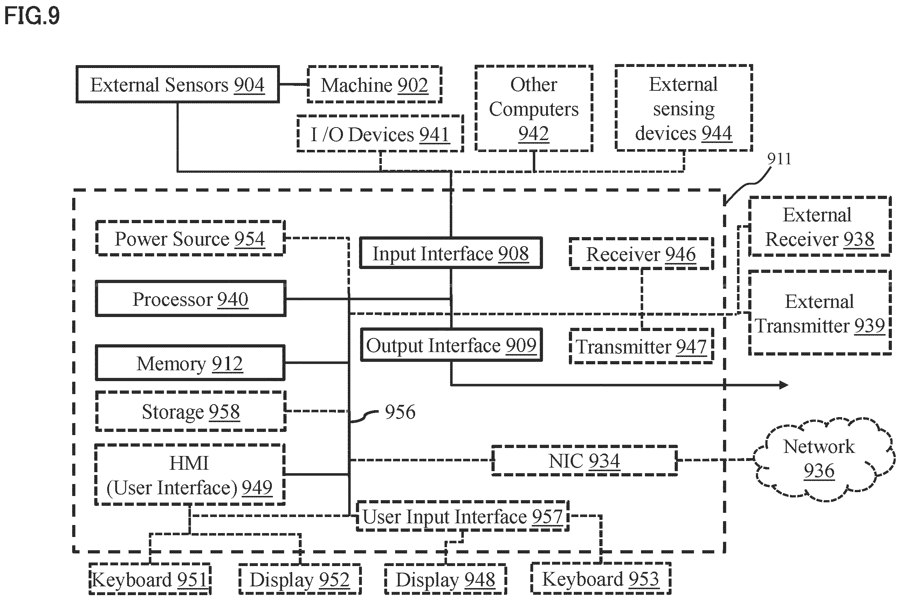

FIG. 9 illustrates a block diagram of a system for implementing a system for tracking an object, according to some example embodiments; and
[FIG. 10]

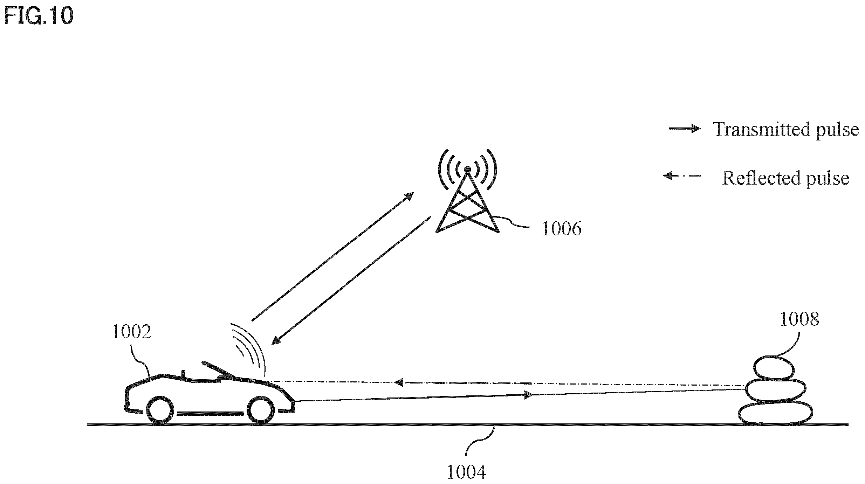

FIG. 10 illustrates a scenario depicting an example use case of a system for tracking objects in a scene, according to some example embodiments.

[Description of Embodiments]

While the above-identified drawings set forth presently disclosed embodiments, other embodiments are also contemplated, as noted in the discussion. This disclosure presents illustrative embodiments by way of representation and not limitation.
The following description provides exemplary embodiments only, and is not intended to limit the scope, applicability, or configuration of the disclosure. Rather, the following description of the exemplary embodiments will provide those skilled in the art with an enabling description for implementing one or more exemplary embodiments.
Specific details are given in the following description to provide a thorough understanding of the embodiments.

However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, similar reference numbers and designations in the various drawings indicate similar elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

There has been a widescale adoption of object detection and tracking techniques in several application areas owing to the need to understand the environment around a subject for taking informed decisions. For example, in remote sensing applications, it is often desired that the physical characteristics of an area be described in as much clarity as possible. In other applications such as autonomous and semi-autonomous vehicles, taking time bound decisions is critical for the operation of such vehicles. For all such applications it is essential that range estimation of objects in the scene of interest be performed accurately.

Lidar is an increasingly popular sensing modality for ranging applications varying from autonomous driving to industrial robotics and lunar navigation. An advanced type of Lidar is a Single-Photon Lidar (SPL), also known as Geiger-mode Lidar, that leverages the properties of single-photon detectors for depth sensing and three-dimensional (3D) mapping. It differs from traditional lidar systems by using sensors capable of detecting individual photons, providing high sensitivity and precision. Various Lidar systems rely on principles of pulse emissions. SPL operates on the same fundamental lidar principles but employs single-photon detectors, typically Single-Photon Avalanche Diodes (SPADs). The lidar system emits laser pulses toward the target, and the SPAD detectors measure the time it takes for individual photons to travel to the target and back.

However, just like any Lidar system, for SPLs as well, the pulse emissions have their limitations in the context of ToF distance sensing. The illumination period, i.e., the time between pulses during the pulse emission, sets a maximum time-of-flight that can be measured unambiguously.

In order to track an object beyond the unambiguous range, existing solutions fail to achieve reliable range estimation. Accordingly, some example embodiments are specifically directed towards providing object tracking techniques for scenarios where the maximum distance to be measured is greater than the unambiguous range of the underlying sensing system. Some example embodiments aim to perform the range estimation without requiring additional hardware. In this regard, some embodiments are directed towards maximizing the utilization of emitted and absorbed illumination pulses.

The unambiguous range for a remote sensing system is the maximum range at which a target can be located so as to guarantee that the reflected signal/pulse from that target corresponds to the most recent transmitted pulse. The maximum unambiguous range ($R_{max}$) is the longest range to which a transmitted pulse can travel out to and back again between consecutive transmitted pulses. In other words, $R_{max}$ is the maximum distance that light can travel round trip between pulses and still produce reliable information.

The relationship between the pulse repetition frequency (PRF) or their reciprocal value inter-pulse period T (PRT) and $R_{max}$ determines the unambiguous range of the radar. FIG. 1A illustrates a pulse diagram showing a second sweep echo leading to ambiguity in range estimation, according to some example embodiments. A sensing system such as a radar or Lidar emits a series of pulses towards a target. As can be seen the pulses 101, 103, and 105 are uniformly spaced apart, meaning that they have a uniform interpulse period (say $T$).

Let t denote the round-trip time of a pulse from emission to return to the detector after striking a target. If $t < T$ (i.e., the time of flight (ToF) of the pulse is shorter than the interpulse period) then the return (reflection) signal arrives before the next pulse has been emitted. For example, if the pulse 101 returns to the detector within $d_1$ distance, it corresponds to the scenario where the ToF of pulse 101 is shorter than $T$ (corresponding to which the distance is $d_2$). In such a case, as can be seen from FIG. 1A, the reflection of the pulse 101 arrives before the next pulse 103 has been emitted. In another scenario, if $t = T$ then the return signal of the pulse 101 arrives exactly when the next pulse 103 has been emitted. In each of these scenarios (i.e., $t \leq T$), the return signal arriving at the detector on or before the next pulse 103 is emitted, can be regarded with certainty to be the reflection of the pulse 101. Thus, there is no ambiguity in estimating the range from the ToF $t$ when $t \leq T$.

However, if $t > T$ then the return signal (reflection) of pulse 101 arrives after the next pulse 103 has been emitted. For example, referring to FIG. 1A, if the reflection of the pulse 101 returns to the detector within $d_3$ distance, it corresponds to the scenario where the ToF of pulse 101 is longer than the interpulse period $T$. As such, under the usual assumption that a detected signal corresponds to the most recent emitted pulse, the return signal will be considered to be a reflection of the pulse 103 rather than that of pulse 101. This leads to an ambiguity, i.e., the system, without any additional information, cannot infer whether the return signal has come from the first pulse 101 or second pulse 103. Some systems, in determining the range, may consider the return signal detected at distance $d_3$ to be a short-range echo of the next pulse 103. Thus, the estimated range based on the ToF $t$ in such cases is incorrect.

In other words, the maximum range that can be estimated by such systems with unambiguity is the range for which $t$ is less than $T$. This maximum range is called as the unambiguous range and is given by:

$$R_{max} = \frac{c_0(T - \tau)}{2}$$

where

$R_{max}$ = unambiguous Range in [m]
$c_0$ = speed of light [$3 \cdot 10^8$ m/s]
T = Pulse Repetition Time (PRT) [s]
$\tau$ = length of the transmitted pulse [s].

The factor of 2 in the equation above accounts for the pulse traveling to the target and then back to the detector. The length of the transmitted pulse (pulse width $\tau$) in the above equation indicates that the complete echo impulse must be received. Often, the entire pulse length must first be processed to detect a target. If the transmitted pulse is very short in relation to the pulse period, it can be ignored. Ignoring pulse length, the maximum unambiguous range of any pulsed signal radar or lidar can be computed with the formula:

$$R_{max} = \frac{c_0 T}{2} = \frac{c_0}{2f_p}$$

where $f_p$ = pulse Repetition Frequency (PRF) [Hz or s$^{-1}$].

FIG. 1B illustrates a schematic of a system 100 for tracking positions of a target 108, according to some example embodiments. The system 100 comprises a memory storing different types of data, instructions, and software modules that are utilized by a processor 104 of the system 100 to track the target 108. The system 100 may also comprise an interface configured to perform data exchange with other components of the system 100 or with other systems.

It may be contemplated that tracking of an object such as the target 108 may amount to continuous range estimation of the target 108. In this regard, either or both of the system 100 and the target 108 may be under motion. In some embodiments, none of the target 108 or the system 100 may be under motion and the tracking of the target 108 may correspond to periodic estimation of the range to the target 108. According to some embodiments, the system 100 may obtain a map of a space in which the target 108 is located and determine the coordinates of the target 108 based on the estimated range. Thus, the system 100 may be utilized in a variety of applications where range estimation is a fundamental or primary requirement.

The operations performed by the system 100 are described next with reference to FIG. 1C which illustrates a method 150 for tracking the target 108. The system 100 controls 152 an illumination source such as the illumination source 107 of FIG. 1B to periodically emit illumination pulses for illuminating a scene containing the target 108. The illumination source 107 comprises an illuminator such as a laser or light emitting diode (LED). The illumination source 107 may provide any suitable illumination of choice and can be configured accordingly. For example, the illumination source 107 may be a laser source emitting periodic laser pulses. The illumination source 107 has a pulse repetition rate at which pulses of illumination are emitted from it.

The emited illumination pulses travel to the target 108 and are reflected from it back to the system 100 where a detector 109 detects 154 the reflected illumination. Towards this end, the detector 109 may be realized with one or more sensors and associated optics and electromics. For example, the detector 109 may comprise focusing optics to collect the reflected illumination from the target 108 onto one or more photodiodes. According to some embodiments, the objective for range estimation may not include signal processing for the recived reflections, and accordingly the detector 109 may only count the time of arrival of the reflected signal towards the detection of the reflected signal. According to some embodiments, the detector 109 may have a focused field of view to filter out noise or scattered illuminations reaching the detector 109. Still, in some embodiments, the detector 109 may apply one or more filters to the detected signal to remove outliers or noise. Since the emitted pulses are in sequence, the detector 109 also performs a sequence of detections of the reflected illuminations.

The processor 104 may be communicatively coupled with the illumination source 107 and the detector 109. The detected reflections are obtained by the processor 104 through the interface 106 and processed to estimate a sequence of modulo distances to the target object wrapped by a pulse repetition period of the illumination source 107. The sequence of modulo distances forms a discontinuous trajectory that is not differentiable at least at one instance of time. The processor then unwraps 156 the sequence of modulo distances to the target 108 wrapped by a pulse repetition period of the illumination source 107. The unwrapping may be performed in any suitable way known in the art. For example, the processor 104 may utilize a suitable unwrapping algorithm such as first-order difference phase unwrapping algorithm or convex optimization algorithm to unwrap the sequence of wrapped modulo distances. Alternately, the processor 104 may utilize an extended Kalman filter to unwrap the sequence of wrapped modulo distances.

By unwrapping the modulo measurements, the processor 104 obtains a continuous trajectory of the target 108 which may be output 158 for further processing. The continuous trajectory defines a change of distances of the target 108 with respect to the illumination source 107 or the detector 109. The continuous trajectory of the target is differentiable at all instances of time. According to some embodiments, the processor 104 may recover an unwrapped depth estimate of the target 108 at each measurement/detection time using the continuous trajectory. According to some embodiments, the processor 104 may also perform an offset estimation to shift the continuous trajectory of the target 108. The shifting results in a shifted continuous trajectory tracking absolute distances of the target 108 with respect to the illumination source 107.

Pulsed ToF Lidar measures distance from the time difference between an illumination pulse emission and the detection of the back-reflected echo. A modulo pulsed lidar uses the same optical mechanism but uses additional processing to reconstruct absolute distance measurements for continuous trajectories. FIG. 2A shows a framework for absolute depth measurement of a target trajectory beyond the unambiguous range of a pulsed time-of-flight lidar system, according to some example embodiments. The framework depicts the process of estimating a target trajectory based on a modulo pulsed ToF Lidar system 200. A pulsed light source 202 illuminates 201 the target with a sequence of laser pulses. At this instance, the detector timing clock is triggered to start so as to measure the detection time. The detector 204 detects 203 the back-reflected light from the target to produce an electrical signal related to the intensity of detected light, which is then sampled and digitized 205 by an analog-to-digital converter (ADC) 206. From the digitized signal, the processor 208 estimates 207 a delay relative to the most recent pulse emission time and stores the estimate in memory 210. In this regard, any suitable technique for computing the delay from the digitized light intensity, including finding the peak of the back-reflected pulse, computing the centroid of the back-reflected pulse, or using a matched filter to calculate the maximum likelihood delay, may be utilized. From a sequence of delay estimates stored in memory 210, the processor 208 can further estimate the full trajectory by unwrapping 209 the modulo measurement and recovering a global offset. Finally, the estimated trajectory is output 211 by an interface 212. For example, the estimated trajectory may be displayed at a display interface.

FIG. 2B shows a schematic of a pulsed time-of-flight (ToF) lidar system 230 for producing modulo measurements, according to some example embodiments. In the pulsed ToF lidar system 230 the raw measurement is the time-resolved light intensity. The measurement starts when the pulse is emitted from the pulsed light source 232, and the light intensity measured by a detector 234 such as a photodiode is recorded over time. In principle, the back-reflected pulse from the target 231 causes a peak in the intensity measured by the ADC 236. Assuming the recorded peak is due to reflection from the illuminated target 231, the ToF estimate requires peak fitting or other peak finding methods to obtain the trajectory estimate 241.

With more advanced Lidars the modulo measurements are obtained differently. For example, Single-Photon Lidar (SPL) emits laser pulses toward the target, and the SPAD detectors measure the time it takes for individual photons to travel to the target and back. However, even with SPLs, the pulse emissions have their limitations in the context of ToF distance sensing. The illumination period, i.e., the time between pulses during the pulse emission, sets a maximum time-of-flight that can be measured unambiguously.

FIG. 2C shows a schematic of a pulsed single-photon lidar (SPL) system 250 for producing modulo measurements, according to some example embodiments. A pulsed laser 252 produces periodic pulses of laser illuminations to illuminate the target 251. The single-photon detector (SPD) 254 may comprise one or more of a single-photon avalanche diode (SPAD), superconducting nanowire photodetector (SNSPD), photomultiplier tube (PMT), or other SPD. Instead of measuring the time-resolved light intensity directly, the pulsed SPL system 250 records the time stamps of individual photon detections with a time-to-digital converter (TDC) 256. The TDC may be realized through suitable circuitry that generates a digital output corresponding to each photon detection timestamp. The TDC 256 along with the SPD 254 thus generates raw data as a sequence of photon detection time stamps. With multiple illuminations, and assuming the target 251 is static or moves sufficiently slowly, SPL can collect enough photon detections to statistically recover the light intensity equivalent to the full waveform from a single pulse. Peak finding methods or other statistical estimators are then used for collections of photon detections for producing the trajectory estimate 253.

The advantages of SPL are two-fold. First, the sensitivity to single photons means even weaker light can be detected, either from lower-power laser sources or weaker (e.g., more distant or darker) target reflections. Second, the time stamps for individual photons can be recorded at as low as picosecond scales, allowing for shorter pulse durations and thus achieving greater precision than can typically be achieved with classical ToF lidar.

One attribute of all pulsed ToF systems, including classical and single-photon lidar, is that the maximum unambiguous range is set by the time between pulses. FIG. 3 illustrates a timing diagram showing relationship between maximum unambiguous range and time between pulses in a pulsed time-of-flight lidar system, according to some example embodiments. As shown in FIG. 3, the measurement for true ToF 310 commences when a pulse is emitted, and a delay is recorded (the peak position for classical ToF, or a photon detection time for SPL) relative to the pulse emission time 302 of the first pulse. However, when multiple pulses are emitted before a reflection of the first pulse is recorded 304, the delay measurement (observed ToF 306) is still made relative to the emission time of the most recent pulse 308. Thus, the time between pulses sets the lidar's unambiguous range.

Let the time between pulses (interpulse period) be $t_r$, so that the pulse repetition frequency is $f_r = 1/t_r$. The pulse duration $t_p << t_r$ is significantly shorter than the time between pulses. The maximum ToF that can be measured unambiguously is $t_r/2$, where the division by 2 accounts for the fact that the light must travel to the target and back. Given the speed of light $c \approx 3 \times 10^8$ m/s, the maximum distance that can be measured unambiguously, i.e., the unambiguous range, is $z_r = ct_r/2$.

Thus having multiple pulses simultaneously in flight causes range ambiguity, and most pulsed lidars thus limit the pulse repetition rate so that ambiguity does not occur for some maximum range of interest. However, decreasing the pulse rate also decreases the rate at which distances are sampled, which is important in the case of tracking moving objects. Moreover, for SPL, more pulses means more photon detections, which yields more precise depth estimates. Thus there is a tradeoff between having better depth precision and unambiguous depth.

Pulsed lidar systems such as SPL acquire modulo time-of-flight measurements naturally due to the periodic illumination sequences. If the distance z to an object is greater than the unambiguous range, i.e., $z > z_r$, then another pulse will have been emitted before the previous one has been detected. Let $z = z_r + \delta_z$, where $0 < \delta_z < z_r$. Then the distance $z$ exceeds the unambiguous range by $\delta_z$. The delay measured relative to the most recent pulse time will correspond to a distance $\delta_z$, which is a modulo measurement. In fact, for any integer $k$, if the distance is $z = kz_r + \delta_z$, the delay will correspond to a distance $\delta_z$, indicating the inherent ambiguity caused by modulo measurements.

FIG. 4A depicts an example target trajectory 400, the corresponding modulo measurements, and the raw data used to make the modulo measurements in a pulsed time-of-flight lidar system, according to some example embodiments. As an example, if the repetition frequency $f_r = 10$ MHz, the unambiguous range is $z_r = 15$ m. It may be observed that the target distance changes over time, and when its trajectory 400 crosses an integer multiple of $z_r$, the observed measurement is wrapped because the delay is estimated relative to the most recent pulse emission. At T=19 s, the raw measurement 401 shows how the light intensity appears wrapped when the trajectory 400 crosses an integer multiple of $z_r$. The wrapping also causes the object at time T=58 s shown in measurement 403 to appear slightly closer than at T=80 s shown in measurement 405, even though the true distance 402 is much closer at 80 s than at 58 s. In fact, at T=80 s, the modulo position 404 overlaps the true position 402.

FIG. 4B shows the same example trajectory as in FIG. 4A, but the raw measurements are made with a single-photon lidar system, and the photon time stamps are accumulated into photon count histograms 421, 423, and 425 over short periods of time.

An important note about pulsed ToF is that, in addition to measuring distance, the raw measurement also encodes information about the target reflectivity, which changes with distance. Specifically, as shown in FIG. 4A, the height of the pulse waveform encodes how much attenuation has occurred, i.e., the intensity is inversely proportional to the squared distance from the target. At closer times in the target trajectory 400, the amplitude of the received signal is higher. Likewise, in FIG 4B, the rate of photon detections is inversely proportional to the squared distance from the target.

Within the scope of this disclosure, modulo measurement means for any integer $k$, if the distance is $z = kz_r + \delta_z$, the same modulo measurement $\delta_z$ will be recorded. Resolving the uncertainty of a modulo measurement requires estimating the unknown integer $k$. Although individually that information may be lost, for a sequence of modulo measurements, it is possible to recover the unknown integer for each measurement. Signal recovery from modulo measurements requires two types of considerations: 1) local, and 2) global.

(Local Recovery - Unwrapping)

Local assumptions effectively enforce smoothness constraints, i.e., how quickly a modulo signal can vary. For example, most research on modulo sampling assumes bandlimited, finite-energy signals. For modulo lidar, local assumptions constrain how quickly the trajectory of a moving target can change, which is limited by physics. Since an object cannot instantaneously jump from one position to another, it must move along a continuous trajectory with some velocity limitations.

Applying local assumptions for modulo recovery is a process called "unwrapping", given its similarity to phase unwrapping. Numerous methods exist for unwrapping modulo signals. For instance, the classical approach to phase unwrapping can be applied, which assumes the first-order difference between adjacent samples is less than half of the

dynamic range $t_r$. The unlimited sampling framework generalizes phase unwrapping to use higher order differences, which has theoretical guarantees for noiseless bandlimited signals, even if the first-order difference is greater than $t_r/2$. Other methods for enforce a bandlimited condition in the spectral domain and consistency with the time-domain measurements via an optimization problem.

FIG. 4C shows an example of the unwrapping procedure and how it is sensitive to noise. The true target trajectory 452 is a smooth function of distance over time. Once again, the repetition frequency $f_r$ = 10 MHz yields an unambiguous range of $z_r$ = 15 m. The modulo measurements 454 of the true trajectory 452 are determined by estimating the delay of the light intensity relative to the most recent illumination pulse time. This estimate is inherently noisy due to the pulse width, background light, and non-ideal detectors, so the modulo measurements are affected by both the modulo and the uncertainty in the delay. To remove the modulo effect, an unwrapping algorithm such as first-order difference phase unwrapping may be used, which sequentially adds or subtracts integer multiples of $z_r$ depending on the relative differences between adjacent samples. However, unwrapping methods may be sensitive to noise, as shown in the unwrapped trajectory 456. The unwrapped trajectory 456 generally follows the true trajectory up to T = 58 s. However, at T = 58 s, noise causes the unwrapping algorithm to incorrectly add $z_r$ = 15m more than necessary, which then causes an incorrect shift for all subsequent unwrapped measurements. Simultaneously enforcing the smoothness of a trajectory for both denoising and unwrapping can improve unwrapping results and avoid incorrect jumps.

(Global recovery - Offset Estimation)

Even if a modulo signal is unwrapped correctly, the unwrapped measurement may still have a global integer ambiguity. FIG. 4D shows multiple possible signals 474, 476, 478 with different offsets that lead to identical modulo measurements 472. Given only the modulo measurements 472, there is no way to determine which of the signals 474, 476, or 478 is the true trajectory. Therefore, to recover the global offset and thereby the absolute distance requires additional constraints or measurement information.

(Trajectory Recovery from Modulo Lidar Measurements)

Trajectory recovery from modulo lidar measurements first unwraps the modulo measurements by applying local constraints and then resolves the remaining integer offset uncertainty with global assumptions.

In this regard, existing unwrapping methods may be effective in unwrapping modulo lidar measurements. Alternatively, unwrapping methods may be tailored to the particular problem of trajectory estimation. For instance, target motion in one dimension may be described by a motion model such as a constant velocity model or a Singer model, which assumes motion with a constant velocity unless a maneuver occurs. Maneuvers are characterized by the acceleration, and deviations from normal motion are assumed to be a Gaussian random process. Estimating the state vector (position, velocity, acceleration) of the target can be performed with a Kalman filter, which predicts the next state given the current state and updated by a new measurement. Because the measurements are nonlinear due to the modulo, variations on the Kalman filter may be used. For instance, the modulo measurements may be embedded in a periodic signal such as a sine or cosine, and then the extended Kalman filter (EKF) can be used to linearize the measurement. Alternatively, the unscented Kalman filter or particle filter could be used to track how the nonlinearity affects the predictions. If the parameters of the motion model are unknown, a single Kalman filter may not be able to accurately predict the trajectory from modulo samples. Instead, methods such as the Interacting Multiple Models or Variational Bayes Kalman filter can be used to estimate the parameters of the motion model, in addition to performing unwrapping.

For global offset recovery, various constraints or additional information can be used to recover absolute distance measurements. It may be the case that the initial position of the object is at a known distance, e.g., the first sample time is within the unambiguous range. Then this constraint can be used to resolve the integer ambiguity even if the object exceeds the unambiguous range at a later time in the trajectory. Another approach is to take advantage of reflectivity information embedded in the raw data. Specifically, the height of the pulse waveform or the rate of photon detections encodes how much attenuation has occurred due to the travel distance of light scattered from the target. The radial light fall-off is a function of the absolute distance to the object-independent of the modulo distance-so reflectivity changes relative to a reference measurement at a known distance can be used to resolve the global integer uncertainty. Furthermore, it is possible to use the reflectivity information even if no reference measurement is made at a known distance. Instead, since the reflectivity varies over the entire target trajectory, it is possible to solve for the integer offset resulting in the best fit between the change in reflectivity and possible changes in position.

FIG. 5A shows a detailed schematic of an example modulo system 500 using a Single-Photon Lidar (SPL). According to some embodiments, the SPL may also be referred to as a Geiger-mode Lidar that detects photon counts as low as one at a time. A pulsed laser 501 illuminates a target object 502 that is movable in one dimension such as on a setup bench 504. A SPAD detector 505 observes the same optical axis 507 as the pulsed laser 501 through a beamsplitter 503. The light reaching the SPAD detector 505 is focused by a lens 509 and spectrally filtered by a filter 511 to only allow light at the laser wavelength to reach the detector 505. The measurement for a sequence of pulses is a sequence of photon detection times recorded with a time-to-digital converter (TDC) 513. The TDC 513 thus provides raw data as a sequence of photon detection time stamps.

In general, the photons detected by a SPAD detector 505 are random observations of the full waveform signal, consisting of the back-reflected pulse, noise, and other degradations such as interference or multi-path. Due to the statistical nature of single photon detection, not every pulse will necessarily be followed by a photon detection. Alternatively, depending on the single-photon detector configuration, some pulses may be followed by multiple photon detections. Accumulating photon detections over time by a computer 515 leads to a temporal histogram that approximates a full-waveform measurement. In lidar acquisitions for static targets, depth estimators can use the entire sequence of photon detection time stamps. However, for moving targets, separate depth estimates are desired for smaller units of time, in order to properly track the target motion. Thus, the acquisition time during which all photon detection time stamps are acquired can be sub-divided into a sequence of sub-acquisitions corresponding to a fraction of all emitted laser pulses. Each sub-acquisition in turn comprises multiple photon detection times.

Corresponding to each sub-acquisition, a modulo depth estimate for the target may be determined from the photon detection times within the respective sub-acquisition. In this regard, according to some embodiments, the modulo depth estimate corresponding to a sub-acquisition may include the centroid of the photon detection times within that sub-acquisition. According to some embodiments, the modulo depth estimate corresponding to a sub-acquisition may include the maximum likelihood depth estimate, implemented as the log-matched filter of the photon detection times within that sub-acquisition. In yet some embodiments, the modulo depth estimate in a sub-acquisition is determined by union of subspaces decomposition, which finds the best fit of the detection times to a model assuming the detected light is composed of uniform background light and a single reflected peak.

FIG. 5B describes the acquisition model of the system 500 of FIG. 5A and will be described in conjunction with FIG. 5A. The pulsed laser 501 constitutes an illumination system that emits a total of $n_r$ pulses repeated at times $n\,t_r$, where $n = 0, \ldots, n_r - 1$. Thus the time between pulses is $t_r$, and the pulse repetition frequency is $f_r = 1/t_r$. The pulse duration $t_p \ll t_r$ is significantly shorter than the time between pulses. The laser pulse shape is $s(t)$ and often approximated by a Gaussian distribution (Gaussian with root mean square duration $t_p \ll t_r$).

Let every photon detected by the SPAD detector 505 be time-stamped with an *absolute* detection time $T_\ell$ for $\ell = 0, \ldots, N_d - 1$, where the total number of photons detected $N_d$ is a random variable. The set of absolute detection times is denoted as $\{T_\ell\}_{\ell=0}^{N_d-1}$. However, there is no way to determine which illumination pulse generated a detected photon. Under the conventional assumption that no depth aliasing occurs, i.e., the target depth $z < z_r$, then the *relative* detection times $\{W_\ell\}_{\ell=0}^{N_d-1}$ are recorded relative to the most recent pulse illumination time, i.e., $W_\ell = T_\ell \bmod t_r$.

*Target*

The target 502 is an object that occupies position $z(t)$ at time $t$, which assumes the object motion is along one dimension. This means the same object is visible throughout the measurement duration (i.e., no occlusion occurs). The time of flight (ToF) $\bar{t}_n$ is the time it takes for pulse $n$ to reach the object. The $n^{\text{th}}$ pulse illuminates the target at time $nt_r + \bar{t}_n$ and position $z(nt_r + \bar{t}_n) = c\bar{t}_n$.

Assuming the beam divergence is negligible, equal laser power hits the target 502 regardless of its distance from the laser 501. The reflectivity of the object-including attenuation effects from the surface albedo, view angle, detector efficiency, and fall-off-is inversely proportional to the target distance.

Consider the reference reflectivty $\alpha_{ref}$ measured at a reference distance $z_{ref} = c\bar{t}_{ref}$. For a target with Lambertian surface albedo, the reflectivity falls off as the inverse square of the target distance, so for the $n^{\text{th}}$ pulse, the reflectivity is

$$\alpha_n = \alpha_{ref} \Big/ \left(\frac{\bar{t}_n}{\bar{t}_{ref}}\right)^2 .$$

(Measurement)

Single-photon lidar detection is a random process. Photons arrive at the detector as a realization of a Poisson process with rate function given by

$$\phi(t) = b + \sum_{n=0}^{n_r-1} \alpha_n s(t - nt_r - 2\bar{t}_n)$$

where $b$ is the background intensity combining detections due to ambient light and detector dark counts. Assuming there is approximately one (potentially wrapped) pulse in each repetition period, the photon detection rate is given as

$$\Phi_n = \int_{nt_r}^{(n+1)t_r} \phi(t)dt = \alpha_q S + B, \qquad q \le n.$$

Let the signal rate be defined as $S = \int_0^{t_r} s(t)dt$, the background rate as $B = bt_r$, and the signal to background ratio (SBR) as $\alpha_q S/B$. Note that a photon detected in period n may have initially been emitted by the laser 501 in pulse $q \le n$ due to the modulo behavior. It can be assumed that the SPL operates in the low-flux regime with $\Phi_n \ll 1 \ \forall n$ so that non-idealities such as dead time can be ignored, and the detection sequence can be considered an inhomogeneous Poisson process with rate function $\phi(t)$.

(Modulo Single-Photon Lidar Recovery)

Each individual detected photon could be a signal photon 521 due to signal or a background photon 523 due to background, but it is impossible to tell the true source in isolation. Instead, according to some embodiments, if the target motion is assumed to be negligible over $n_f$ short time frames (sub-acquisitions) of duration $t_f$ then multiple detections may be accumulated into a histogram 525 over each time frame. A single modulo depth measurement is made for each time frame via pre-processing, then the sequence of modulo depths is unwrapped and the global integer offset is estimated.
The $m^{th}$ frame includes $K_m$ photons, which are approximately identically distributed, and $K_m$ is a random variable. The modulo depth estimate is made by applying the approximate log-matched filter

$$d_m = \arg \max_{t \in (0,t_r]} \sum_{\ell \in I_m} \log \left( \sum_{i=-\infty}^{\infty} s(W_\ell - t - it_r) \right),$$

where $I_m$ contains the indices of the detections in the $m^{th}$ frame.

The sequence of estimates $\{d_m\}_{m=1}^{n_f}$ represents the set of modulo measurements, with one estimate per time frame (sub-acquisition).
The reflectivity can likewise be estimated from the detections in each time frame/sub-acquisition. For example, some embodiments estimate the reflectivity from the photon counts. According to some embodiments, the reflectivity estimate in each sub-acquisition may be made from the photon detection times. If the background rate $B$ is known from calibration, then the constrained maximum likelihood estimator of the reflectivity is

$$\hat{\alpha}_m = \max \left\{ 0, \left[ \log \left( \frac{N_m}{N_m - K_m} \right) \right] \right\}$$

where $N_m$ is the number of illumination periods in the frame time $t_f$.
FIG. 5C shows how the reflectivity and depth may instead be jointly estimated via a union of subspaces method assuming a 1-sparse signal plus an unknown background level. Consider a signal dictionary $\boldsymbol{S}$ that contains N possible modulo shifts of the illumination pulse on a uniform grid. Then the $\ell^{th}$ bin of a histogram of detection times within a subacquisition is distributed as

$$\boldsymbol{y}_\ell \sim \text{Poisson}((\boldsymbol{Sv} + b\boldsymbol{1}_{L\times 1})_\ell),$$

where $1_{L \times 1}$ is a length-$L$ vector of ones. Since the target is assumed to be opaque and quasi-static within a sub-acquisition, $v$ is 1-sparse, i.e., it has a single non-zero element. The goal is then to identify the union of subspaces that best represents the 1-sparse signal and the uniform background. Define $A = [S, 1_{L \times 1}]$, $x = [v, b]^T$, and choose some tolerance $\varepsilon$ as a stopping criterion. The thresholding operator or hinge function $\mathcal{T}_0$ sets negative values to zero, $supp(x)$ is the support of $x$, and $x_{[1]}$ keeps only the largest value of $x$. Then the algorithm 550 can be used to recover $x^{(k)}$, where the first $N$ elements correspond to a 1-sparse signal vector and the last element is an estimate of the background $b$. The modulo depth estimate is the shift corresponding to the nonzero element of $x_{[1:N]}$, and the reflectivity is the amplitude of the non-zero element.

From these modulo depth measurements, local recovery can be achieved using any suitable unwrapping algorithm, for example, first-order phase unwrapping, higher-order differences, beyond bandwidth residual reconstruction (B2R2), etc., or from custom trajectory recovery algorithms using a Kalman filter. The sequence of estimates $\{\tilde{u}_m\}_{m=1}^{n_f}$ represents the set of unwrapped measurements.

Global integer offset recovery may be achieved by finding the best fit global trajectory that accounts for the changing reflectivity as a function of distance. For instance

$$\hat{k} = \arg \min_{k \in \mathbb{Z}} \sum_{m=1}^{n_f} \left( \hat{\alpha}_m - \alpha_{ref} \theta_{m,k} \right)^2$$

where $\theta_{m,k} = 1/(\tilde{u}_m + kt_r)^2$, which finds the integer $k$ that best accounts for radial falloff using a squared-error loss.

The value $\alpha_{ref}$ may be the calibrated detection rate for the target at a known distance $z_{ref}$. Alternatively, the value $\alpha_{ref}$ may be estimated from the data itself as

$$\hat{\alpha}_{ref,k} = \frac{\sum_{m=1}^{n_f} \hat{\alpha}_m \theta_{m,k}}{\sum_{m=1}^{n_f} \theta_{m,k}^2}.$$

FIG. 6 illustrates the workflow of a first-order difference phase unwrapping algorithm 600 utilized for unwrapping a sequence of modulo distances estimated by the system of FIG. 5A, according to some example embodiments. For each sample m, the difference in the modulo samples $\Delta_m = d_m - d_{m-1}$ is computed. If $|\Delta_m|$ is larger than one-half of the unambiguous range, it is assumed that a wrapping has occurred. An integer shift $j$ is updated to counteract the wrapping, and the unwrapped measurement is given as $\tilde{u}_m = d_m + j z_r$. First-order phase unwrapping is extremely simple, requiring neither prior knowledge on properties of the trajectory nor that the samples are uniformly spaced in time, and there are no hyperparameters.

FIG. 7 illustrates the workflow of a convex optimization algorithm (LASSO-B2R2) 700 utilized for unwrapping a sequence of modulo distances estimated by the system of FIG. 5A, according to some example embodiments. The LASSO-B2R2 algorithm 700 assumes the input trajectory $u$ is bandlimited, with known bandwidth $[-\rho\pi, \rho\pi]$, and has finite energy, meaning the trajectory would start and end at distance 0. The modulo samples can be written as $d(m) = u(m) + r(m)$, where $r(m)$ is known as the residual signal. The algorithm 700 aims to recover the original signal from the first-order difference of the modulo samples $\hat{d}$. Recovery takes advantage of both spectral and temporal information. In the Fourier domain, any frequency content of the modulo samples beyond the known bandwidth can only be due to the residual signal, leading to the linear equation $\hat{F}_d = V\hat{r}$, where $V$ is the partial discrete Fourier transform (DFT) operator for frequencies outside of the signal bandwidth. Recovering $\hat{r}$ from $\hat{F}_d$ is a linear inverse problem that can be regularized with a penalty encouraging the sparsity of $\hat{r}(m)$. After recovering $\hat{r}$, the full residual can be recovered via a cumulative sum and then subtracted from the modulo samples to yield the unwrapped trajectory. The implementation 700 uses the soft-thresholding operator $S_{\gamma\tau}(x) = sign(x) \max(|x| - \gamma\tau, 0)$, which is the proximal operator for the $\ell_1$-norm promoting sparsity. The algorithm also uses a tolerance $\varepsilon$ and a maximum number of iterations maxIter as stopping criteria.

FIG. 8 illustrates the workflow utilized for unwrapping a sequence of modulo distances using an extended Kalman filter (EKF) algorithm 800, according to some example embodiments. If some properties of the target motion are known in advance, an extended Kalman filter can be used to perform the unwrapping. Suppose the target motion, given by postion $z(t)$, velocity $v(t)$, and acceleration $a(t)$, is described by a Singer trajectory, which assumes the target has constant velocity unless a manuever occurs. The target maneuver variable is then the acceleration $a(t)$, which causes deviations from the normal motion and is assumed to be time-correlated with autocorrelation function

$$R_{AA}(\tau) = E[a(t)a(t - \tau)] = \sigma_a^2 \exp(-\beta|\tau|)$$ . At time m the target state vector Is $x_m = [z(t_m), v(t_m),$
$a(t_m)]^T$ . Given the time between measurements $\delta_m = t_{m+1} - t_m$, define the equations of motion as

$$x_{m+1} = \Phi(\delta_m, \beta)x_m + u_m,$$

where the target state transition matrix is

$$\Phi(\delta_m, \beta) = \begin{bmatrix} 1 & \delta_m & (-1 + \beta\delta_m + \exp(-\beta\delta_m))/\beta^2 \\ 0 & 1 & (1 - \exp(-\beta\delta_m))/\beta \\ 0 & 0 & \exp(-\beta\delta_m) \end{bmatrix},$$

and the inhomogeneous driving input $u_m$ is a discrete-time white noise sequence whose statistics depend on $\delta_m$, $\beta$, $\sigma_a^2$ .

The Extended Kalman filter may be used to predict the state vector sequence from the previous state vector estimates, updated by the measurements and accounting for the modulo. Let the state transition and measurement models be as follows:

$$x_m = f(x_{m-1}; u_m; \theta, \delta_k) + w_{m(\theta, \delta_k)}, \quad w_m \sim \mathcal{N}\left(0, Q_m(\theta, \delta_k)\right)$$

$$d_m = h\left(\mathcal{M}_{[0,z_r)}(z_m + r_m)\right), \quad r_m \sim \mathcal{N}(0, \sigma_r^2).$$

Here the model parameter vector is $\theta = [\beta, \sigma_a]^T$; $w_m$ is a zero-mean multivariate Gaussian with covariance $Q_m$ that depends on $\beta, \sigma_a, \delta_m$; $z_m$ is the position element of $x_m$; $\mathcal{M}_{[0,z_r)}$ applies the modulo with respect to $z_r$; the measurement noise $r_m$ is a zero-mean univariate Gaussian with variance $\sigma_r^2$ ; and the measurements are embedded in a pair of sinusoids as

$$h(x; z_r) = \left[\cos\left(\frac{2\pi x}{z_r}\right), \sin\left(\frac{2\pi x}{z_r}\right)\right].$$

Note that because the sinusoids have period $z_r$, the embedding is agnostic to the modulo, as $h(\mathcal{M}_{[0,z_r)}(x); z_r) = h(x; z_r)$.

The EKF algorithm 800 embeds the modulo measurement in a sinusoid, which preserves an approximately Gaussian error but also reflects the periodicity of the modulo measurement. With each new modulo measurement $d_m$, the EKF updates previous estimates of the unwrapping for the current time step. The unwrapped estimate $\hat{z}_{m|m}$ is the position element of the state vector - $\hat{x}_{m|m}$.

FIG. 9 illustrates a block diagram of a system for implementing a lidar system for tracking positions of an object, according to some example embodiments. The controller 911 includes a processor 940, a computer readable memory 912, storage 958 and user interface 949 with optional display 952 and keyboard 951, which are connected through bus 956. For example, the user interface 964 in communication with the processor 940 and the computer readable memory 912, acquires and stores the photon detection data in the computer readable memory 912 upon receiving a control input or an input from a surface, keyboard 953, of the user interface 957 by a user.

The computer 911 can include a power source 954, depending upon the application the power source 954 may be optionally located outside of the computer 911. Linked through bus 956 can be a user input interface 957 adapted to connect to a display device 948, wherein the display device 948 can include a computer monitor, television, projector, or mobile device, among others. A network interface controller (NIC) 934 is adapted to connect through the bus 956 to a network 936, wherein output data or other data, among other things, can be rendered to an external device such as a third-party display device, third party imaging device, and/or third-party printing device outside of the computer 911.

Still referring to FIG. 9, the output data or other electronic data, among other things, may be transmitted over a communication channel of the network 936, and/or stored within the storage system 958 for storage and/or further processing. Further, time series data or other data may be received wirelessly or hard wired from a receiver 946 (or external receiver 938) or transmitted via a transmitter 947 (or external transmitter 939) wirelessly or hard wired, the receiver 946 and transmitter 947 are both connected through the bus 956. The computer 911 may be connected via an input interface 908 to external sensing devices 944 and external input/output devices 941. For example, the external sensing devices 904 may include sensors gathering data. The computer 911 may be connected to other external computers 942. An output interface 909 may be used to output the processed data from the processor 940. It is noted that a user interface 949 in communication with the processor 940 and the non-transitory computer readable storage medium 912, acquires and stores the various types of data in the non-transitory computer readable storage medium 912 upon receiving an input from a surface of the user interface 949 by a user.

FIG. 10 illustrates a scenario depicting an example use case of an SPL system such as the system 500 of FIG. 5A, according to some example embodiments. A vehicle 1002 moving on a road link 1004 may be connected to a base station 1006. The road link may have one or more obstacles 1008 and the goal may be to traverse the road link 1004 without colliding with the obstacles 1008. Towards this end, it is required that a correct estimation of the depth/range of the obstacles 1008 be determined so that a route for the vehicle 1002 may be planned so as to avoid the obstacles 1008.

The vehicle 1002 may be a manually driven vehicle, a semi-autonomous vehicle or a fully autonomous self-driving vehicle and may be configured for communication with the base station 1006. In this regard, the vehicle 1002 may be equipped with suitable components to execute remote sensing, data communication, and data processing. Towards this end, it may be contemplated that the vehicle may be equipped with an onboard single point (low photon count) lidar system such as the ones described earlier in this disclosure. An emitter of the lidar system transmits a pulse of radiation (shown as solid line) towards the obstacles 1008 and receives a reflection (shown as dotted line) of the transmitted pulse from the scene ahead. Since the vehicle 1002 may be moving, the depth estimation of the obstacles 1008 may not be correctly inferable using conventional techniques.

A controller of the vehicle 1002 may invoke the system to perform position tracking for the obstacles 1008. The system may be fully or partially onboard the vehicle 1002. In embodiments where the system is partially onboard the vehicle 1002, the computation steps leading to range estimation may be performed via edge computing on the base station 1006. In some example embodiments, the vehicle 1002 may determine through the SPL system, the correct range of the obstacles 1008 in accordance with the example embodiments described previously in the disclosure and thereby determine a geo-location of the obstacles 1008, for example using map data. Accordingly, the onboard controller of the vehicle 1008 may determine maneuvers to reroute the vehicle 1008 to avoid collision with the obstacles 1008. In some example embodiments, the vehicle 1002 may additionally or alternately convey at least the geo-location of the obstacles 1008 to the base station 1006 for updating a map of the area in which the road link 1004 exists.

Although the example use case is described with reference to an on-road vehicle, example embodiments described herein may be applicable to any type of vehicle such as a railway wagon, or a spacecraft moving in one dimension, and the like. Other example uses of some embodiments include industrial robotics, computer vision systems and camera autofocus to name a few.

The modulo SPL approach described in this disclosure outperforms other approaches for range and trajectory estimation known in the art. For example, some embodiments realized that trajectory estimation for the Modulo SPL system described in several embodiments is more accurate than that for the full-range SPL system because the full-Range system emits fewer pulse, so it is more sensitive to background noise and it samples the trajectory less frequently.

It may be noted that usually the reflectivity estimates themselves are highly noisy, so they may not be sufficient for estimating the trajectory. However, it is a recognition of several embodiments that the reflectivity is useful for estimating which integer k best corresponds to both the estimated reflectivity values and the unwrapped trajectory with uncertainty $kt_r$. For example, when the reflectivity is known to be $\alpha_{ref}$ at a certain distance $z_{ref}$, then different values of k yield significantly different trajectories, so choosing the correct k that best matches the reflectivity estimates is easy.

For different operating conditions, it is a realization of various embodiments that for sufficiently high SBR, modulo SPL achieves better trajectory estimation than a full-range lidar system. Of course, as the SBR decreases, the higher relative noise level degrades unwrapping and offset recovery performance.

The above description provides exemplary embodiments only, and is not intended to limit the scope, applicability, or configuration of the disclosure. Rather, the following description of the exemplary embodiments will provide those skilled in the art with an enabling description for implementing one or more exemplary embodiments.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicated like elements. Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine-readable medium. A processor(s) may perform the necessary tasks. Various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments.

Embodiments of the present disclosure may be embodied as a method, of which an example has been provided. The acts performed as part of the method may be ordered in any suitable way. Accordingly, embodiments may be constructed in which acts are performed in an order different than illustrated, which may include performing some acts concurrently, even though shown as sequential acts in illustrative embodiments. Further, use of ordinal terms such as "first," "second," in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

## Claims

1. A system (100) for tracking positions of a target object (108), comprising:

   circuitry (102, 104, 106) configured to:

   control an illumination source (107) to periodically emit illumination pulses for illuminating the target object (108);
   detect illumination reflected from the target object (108) to estimate a sequence of modulo distances to the target object (108) wrapped by a pulse repetition period; and
   unwrap the sequence of modulo distances subject to one or more continuity constraints to output a continuous trajectory of the target object (108);

   wherein the circuitry (102, 104, 106, 109) comprises a single-photon detector (109) to detect the illumination reflected from the target object (108) and generate within a total acquisition time, raw data as a sequence of photon detection time stamps;
   **characterized in that**
   the total acquisition time is divided into a sequence of sub-acquisitions, each sub-acquisition of the sequence of sub-acquisitions defined by a plurality of photon detection times, wherein the circuitry (102, 104, 106, 109) is configured to produce a modulo depth estimate from the photon detection times within each sub-acquisition of the sequence of sub-acquisitions to estimate the sequence of modulo distances to the target object (108);
   wherein the modulo depth estimate is made by applying an approximate log-matched filter

$$d_m = \arg\max_{t \in (0, t_r]} \sum_{\ell \in I_m} \log\left(\sum_{i=-\infty}^{\infty} s(W_\ell - t - it_r)\right),$$

   where $I_m$ contains indices of detections in the $m^{\text{th}}$ sub-acquisition, a time between the pulses is $t_r$, $W_\ell = T_\ell \bmod t_r$, every photon detected by the single-photon detector (109) is time-stamped with an absolute detection time $T_\ell$ for

$\ell = 0, ..., N_d - 1$, $N_d$ denotes the total number of detected photons, and $s(t)$ denotes a shape of the pulses; and wherein the sequence of modulo distances is unwrapped by using the first-order difference phase unwrapping algorithm:

$$
\begin{aligned}
&1: \text{set } j = 0, \tilde{u}_0 = 0, m = 1 \\
&2: \quad \textbf{while } m < n_f \textbf{ do} \\
&3: \qquad\qquad \Delta_m = d_m - d_{m-1} \\
&4: \qquad\qquad \textbf{if } |\Delta_m| > z_r/2 \\
&5: \qquad\qquad\qquad j = j - \operatorname{sign}(\Delta_m) \\
&6: \qquad\qquad \textbf{endif} \\
&7: \qquad\qquad \tilde{u}_m = d_m + j z_r \\
&8: \qquad\qquad m = m + 1 \\
&9: \quad \textbf{end while}
\end{aligned}
$$
,

where j denotes an integer shift, $\hat{u}_m$ denotes an unwrapped measurement, target motion is neglected over $n_f$ sub-acquisitions, $z_r = ct_r/2$, and c denotes the speed of light.

2. The system (100) of claim 1,

   wherein the continuous trajectory of the target object (108) defines a change of distances of the target object (108) with respect to the illumination source (107), and
   wherein the circuitry (102, 104, 106) is further configured to determine an offset for shifting the continuous trajectory of the target object (108) to produce a shifted continuous trajectory tracking absolute distances of the target object (108) with respect to the illumination source (107).

3. The system (100) of claim 2, wherein the circuitry (102, 104, 106) is configured to determine the offset from prior knowledge of absolute position of the target object (108) at one or more time instances during the continuous trajectory.

4. The system (100) of claim 2, wherein the circuitry (102, 104, 106) is configured to determine the offset by selecting an offset that causes a match between the continuous trajectory and an observed change in radial falloff over the course of the continuous trajectory.

5. The system (100) of claim 4, wherein the circuitry (102, 104, 106) is further configured to collect the prior knowledge of the absolute position of the target object (108) as complementary data.

6. A method (150) for tracking positions of a target object, the method (150) comprising:

   controlling (152) an illumination source to periodically emit illumination pulses for illuminating the target object;
   detecting (154) illumination reflected from the target object for estimating a sequence of modulo distances to the target object wrapped by a pulse repetition period; and
   unwrapping (156) the sequence of modulo distances subject to one or more continuity constraints to output (158) a continuous trajectory of the target object;
   wherein a single-photon detector (109) is used to detect the illumination reflected from the target object (108) and generate within a total acquisition time, raw data as a sequence of photon detection time stamps;

**characterized in that**

the total acquisition time is divided into a sequence of sub-acquisitions, each sub-acquisition of the sequence of sub-acquisitions defined by a plurality of photon detection times, wherein a modulo depth estimate is produced from the photon detection times within each sub-acquisition of the sequence of sub-acquisitions to estimate the sequence of modulo distances to the target object (108);

wherein the modulo depth estimate is made by applying an approximate log-matched filter

$$d_m = \arg \max_{t \in (0, t_r]} \sum_{\ell \in I_m} \log\left( \sum_{i=-\infty}^{\infty} s(W_\ell - t - it_r) \right),$$

where $I_m$ contains indices of detections in the $m^{\text{th}}$ sub-acquisition, a time between the pulses is $t_r$, $W_\ell = T_\ell \bmod t_r$, every photon detected by the single-photon detector (109) is time-stamped with an absolute detection time $T_\ell$ for $\ell = 0, \dots, N_d - 1$, $N_d$ denotes the total number of detected photons, and $s(t)$ denotes a shape of the pulses; and wherein the sequence of modulo distances is unwrapped by using the first-order difference phase unwrapping algorithm:

$$
\begin{aligned}
&1: \text{set } j = 0,\ \tilde{u}_0 = 0,\ m = 1 \\
&2: \quad \textbf{while } m < n_f \textbf{ do} \\
&3: \qquad\qquad \Delta_m = d_m - d_{m-1} \\
&4: \qquad\qquad \textbf{if } |\Delta_m| > z_r/2 \\
&5: \qquad\qquad\qquad j = j - \text{sign}(\Delta_m) \\
&6: \qquad\qquad \textbf{endif} \\
&7: \qquad\qquad \tilde{u}_m = d_m + j z_r \\
&8: \qquad\qquad m = m + 1 \\
&9: \quad \textbf{end while}
\end{aligned}
$$

,

where $j$ denotes an integer shift, $\tilde{u}_m$ denotes an unwrapped measurement, target motion is neglected over $n_f$ sub-acquisitions, $z_r = ct_r/2$, and $c$ denotes the speed of light.

7. A non-transitory computer-readable medium having stored thereon instructions executable by a computer for performing a method (150) for tracking positions of a target object, the method (150) comprising:

controlling (152) an illumination source to periodically emit illumination pulses for illuminating the target object;

detecting (154) illumination reflected from the target object for estimating a sequence of modulo distances to the target object wrapped by a pulse repetition period; and

unwrapping (156) the sequence of modulo distances subject to one or more continuity constraints to output (158) a continuous trajectory of the target object;

wherein a single-photon detector (109) is used to detect the illumination reflected from the target object (108) and generate within a total acquisition time, raw data as a sequence of photon detection time stamps;

**characterized in that**

the total acquisition time is divided into a sequence of sub-acquisitions, each sub-acquisition of the sequence of sub-acquisitions defined by a plurality of photon detection times, wherein a modulo depth estimate is produced from the photon detection times within each sub-acquisition of the sequence of sub-acquisitions to estimate the sequence of modulo distances to the target object (108);
wherein the modulo depth estimate is made by applying an approximate log-matched filter

$$d_m = \arg \max_{t \in (0, t_r]} \sum_{\ell \in I_m} \log \left( \sum_{i=-\infty}^{\infty} s(W_\ell - t - it_r) \right),$$

where $I_m$ contains indices of detections in the $m^{\text{th}}$ sub-acquisition, a time between the pulses is $t_r$, $W_\ell = T_\ell \bmod t_r$, every photon detected by the single-photon detector (109) is time-stamped with an absolute detection time $T_\ell$ for $\ell = 0, ..., N_d - 1$, $N_d$ denotes the total number of detected photons, and $s(t)$ denotes a shape of the pulses; and wherein the sequence of modulo distances is unwrapped by using the first-order difference phase unwrapping algorithm:

$$
\begin{aligned}
&1: \text{set } j = 0, \tilde{u}_0 = 0, m = 1 \\
&2: \quad \textbf{while } m < n_f \textbf{ do} \\
&3: \qquad\qquad \Delta_m = d_m - d_{m-1} \\
&4: \qquad\qquad \textbf{if } |\Delta_m| > z_r/2 \\
&5: \qquad\qquad\qquad j = j - \text{sign}(\Delta_m) \\
&6: \qquad\qquad \textbf{endif} \\
&7: \qquad\qquad \tilde{u}_m = d_m + jz_r \\
&8: \qquad\qquad m = m + 1 \\
&9: \quad \textbf{end while}
\end{aligned}
$$

where $j$ denotes an integer shift, $\tilde{u}_m$ denotes an unwrapped measurement, target motion is neglected over $n_f$ sub-acquisitions, $z_r = ct_r/2$, and $c$ denotes the speed of light.

**Patentansprüche**

1.  System (100) zum Verfolgen von Positionen eines Zielobjekts (108), umfassend:

    einen Schaltkreis (102, 104, 106), der dazu eingerichtet ist:

    eine Beleuchtungsquelle (107) zu steuern, um periodisch Beleuchtungsimpulse zur Beleuchtung des Zielobjekts (108) zu emittieren;
    von dem Zielobjekt (108) reflektierte Beleuchtung zu erfassen, um eine Folge von Modulo-Distanzen zu dem Zielobjekt (108), die von einer Impulswiederholungsperiode gewrapped sind, zu schätzen; und
    die Folge von Modulo-Distanzen gemäß einer oder mehrerer Stetigkeitsbedingungen zu entwrappen, um eine kontinuierliche Trajektorie des Zielobjekts auszugeben (108);

    wobei der Schaltkreis (102, 104, 106, 109) einen Einzelphotonendetektor (109) umfasst, um die von dem Zielobjekt (108) reflektierte Beleuchtung zu erfassen und innerhalb einer Gesamterwerbungszeit Rohdaten als eine Folge von Photonenerfassungszeitstempeln zu erzeugen;

**dadurch gekennzeichnet, dass**

die Gesamterwerbungszeit in eine Folge von Untererwerbungen unterteilt ist, wobei jede Untererwerbung der Folge von Untererwerbungen durch eine Vielzahl von Photonenerfassungszeiten definiert ist, wobei der Schaltkreis (102, 104, 106, 109) konfiguriert ist, eine Modulo-Tiefenschätzung aus den Photonenerfassungszeiten innerhalb jeder Untererwerbung der Folge von Untererwerbungen zu erzeugen, um die Folge von Modulo-Distanzen zu dem Zielobjekt (108) zu schätzen;

wobei die Modulo-Tiefenschätzung durch Anwendung eines approximativen logarithmisch abgeglichenen Filters erfolgt

$$d_m = \arg \max_{t \in (0, t_r]} \sum_{\ell \in I_m} \log \left( \sum_{i=-\infty}^{\infty} s(W_\ell - t - i t_r) \right),$$

wobei $I_m$ Indizes von Erfassungen von der m-ten Untererwerbung enthält, eine Zeit zwischen den Impulsen $t_r$, $W_\ell = T_\ell \bmod t_r$ ist, jedes von dem Einzelphotonendetektor (109) erfasste Photon mit einer absoluten Erfassungszeit zeitgestempelt ist, $T_\ell$ für $\ell = 0, \ldots, N_d - 1$, $N_d$ die Gesamtzahl an erfassten Photonen bezeichnet, und $s(t)$ eine Form der Impulse bezeichnet; und

wobei die Folge von Modulo-Distanzen mit Hilfe des Algorithmus zum Entwrappen der Differenzphase erster Ordnung entwrappt wird:

1: set $j = 0, \tilde{u}_0 = 0, m = 1$

2:     **while** $m < n_f$ **do**

3:         $\Delta_m = d_m - d_{m-1}$

4:         **if** $|\Delta_m| > z_r/2$

5:             $j = j - sign(\Delta_m)$

6:         **endif**

7:         $\tilde{u}_m = d_m + j z_r$

8:         $M = m + 1$

9:     **end while**     ,

wobei $j$ eine ganzzahlige Verschiebung bezeichnet, $\tilde{u}_m$ eine entwrappte Messung bezeichnet, eine Zielbewegung über $n_f$ Untererwerbungen vernachlässigt ist, $z_r = c t_r/2$ und c die Lichtgeschwindigkeit bezeichnet.

2. System (100) nach Anspruch 1,

wobei die kontinuierliche Trajektorie des Zielobjekts (108) eine Änderung von Distanzen des Zielobjekts (108) in Bezug auf die Beleuchtungsquelle (107) definiert, und

wobei der Schaltkreis (102, 104, 106) ferner konfiguriert ist, einen Offset zum Verschieben der kontinuierlichen Trajektorie des Zielobjekts (108) zu bestimmen, um eine verschobene kontinuierliche Trajektorie zu erzeugen, die absolute Distanzen des Zielobjekts (108) in Bezug auf die Beleuchtungsquelle (107) verfolgt.

3. System (100) nach Anspruch 2, wobei der Schaltkreis (102, 104, 106) konfiguriert ist, den Offset aus Vorwissen über eine absolute Position des Zielobjekts (108) zu einem oder mehreren Zeitpunkten während der kontinuierlichen Trajektorie zu bestimmen.

4. System (100) nach Anspruch 2, wobei der Schaltkreis (102, 104, 106) konfiguriert ist, den Offset zu bestimmen, indem ein Offset ausgewählt wird, der eine Übereinstimmung zwischen der kontinuierlichen Trajektorie und einer beobachteten Änderung eines radialen Falloff im Verlauf der kontinuierlichen Trajektorie bewirkt.

5. System (100) nach Anspruch 4, wobei der Schaltkreis (102, 104, 106) ferner konfiguriert ist, das Vorwissen über die absolute Position des Zielobjekts (108) als komplementäre Daten zu erheben.

6. Verfahren (150) zum Verfolgen von Positionen eines Zielobjekts (150), wobei das Verfahren umfasst:

Steuern (152) einer Beleuchtungsquelle, um periodisch Beleuchtungsimpulse zur Beleuchtung des Zielobjekts zu emittieren;
Erfassen (154) einer von dem Zielobjekt reflektierten Beleuchtung, um eine Folge von Modulo-Distanzen zu dem Zielobjekt zu schätzen, die durch eine Pulswiederholungsperiode gewrappt sind; und
Entwrappen (156) der Folge von Modulo-Distanzen gemäß einer oder mehrerer Stetigkeitsbedingungen, um eine kontinuierliche Trajektorie des Zielobjekts auszugeben (158);
wobei ein Einzelphotonendetektor (109) genutzt wird, um die von dem Zielobjekt (108) reflektierte Beleuchtung zu erfassen und innerhalb einer Gesamterwerbungszeit Rohdaten als eine Folge von Photonenerfassungszeitstempeln zu erzeugen;
**dadurch gekennzeichnet, dass**
die Gesamterwerbungszeit in eine Folge von Untererwerbungen unterteilt ist, wobei jede Untererwerbung der Folge von Untererwerbungen durch eine Vielzahl von Photonenerfassungszeiten definiert ist, wobei eine Modulo-Tiefenschätzung aus den Photonenerfassungszeiten innerhalb jeder Untererwerbung der Folge von Untererwerbungen erzeugt wird, um die Folge von Modulo-Distanzen zu dem Zielobjekt (108) zu schätzen;
wobei die Modulo-Tiefenschätzung durch Anwendung eines approximativen logarithmisch abgeglichenen Filters erfolgt

$$d_m = \arg \max_{t \in (0, t_r]} \sum_{\ell \in I_m} \log\left(\sum_{i=-\infty}^{\infty} s(W_\ell - t - it_r)\right),$$

wobei $I_m$ Indizes von Erfassungen in der m-ten Untererwerbung enthält, eine Zeit zwischen den Impulsen $t_r$, $W_\ell = T_\ell \bmod t_r$ ist, jedes von dem Einzelphotonendetektor (109) erfasste Photon mit einer absoluten Erfassungszeit zeitgestempelt ist, $T_\ell$ für $\ell = 0, ... , N_d - 1$, $N_d$ die Gesamtzahl an erfassten Photonen bezeichnet, und $s(t)$ eine Form der Impulse bezeichnet; und
wobei die Folge von Modulo-Distanzen mit Hilfe des Algorithmus zum Entwrappen der Differenzphase erster Ordnung entwrappt wird:

$$1: \text{set } j = 0, \tilde{u}_0 = 0, m = 1$$
$$2: \quad \textbf{while } m < n_f \textbf{ do}$$
$$3: \quad\quad \Delta_m = d_m - d_{m-1}$$
$$4: \quad\quad \textbf{if } | \Delta_m | > z_r / 2$$
$$5: \quad\quad\quad j = j - sign(\Delta_m)$$
$$6: \quad\quad \textbf{endif}$$
$$7: \quad\quad \tilde{u}_m = d_m + j z_r$$
$$8: \quad\quad M = m + 1$$
$$9: \quad \textbf{end while}$$

wobei $j$ eine ganzzahlige Verschiebung bezeichnet, $\tilde{u}_m$ eine entwrappte Messung bezeichnet, eine Zielbewegung über $n_f$ Untererwerbungen vernachlässigt wird, $z_r = ct_r/2$, und $c$ die Lichtgeschwindigkeit bezeichnen.

7. Nicht-transitorisches computerlesbares Medium, auf dem Anweisungen gespeichert sind, die von einem Computer ausgeführt werden können, um ein Verfahren (150) zum Verfolgen von Positionen eines Zielobjekts durchzuführen, wobei das Verfahren (150) umfasst:

Steuern (152) einer Beleuchtungsquelle, um periodisch Beleuchtungsimpulse zur Beleuchtung des Zielobjekts zu emittieren;
Erfassen (154) einer von dem Zielobjekt reflektierten Beleuchtung, um eine Folge von Modulo-Distanzen zu dem Zielobjekt zu schätzen, die durch eine Pulswiederholungsperiode gewrappt sind; und
Entwrappen (156) der Folge von Modulo-Distanzen gemäß einer oder mehrerer Stetigkeitsbedingungen, um eine kontinuierliche Trajektorie des Zielobjekts auszugeben (158);

wobei ein Einzelphotonendetektor (109) genutzt wird, um die von dem Zielobjekt (108) reflektierte Beleuchtung zu erfassen und innerhalb einer Gesamterwerbungszeit Rohdaten als eine Folge von Photonenerfassungszeitstempeln zu erzeugen;

**dadurch gekennzeichnet, dass**

die Gesamterwerbungszeit in eine Folge von Untererwerbungen unterteilt ist, wobei jede Untererwerbung der Folge von Untererwerbungen durch eine Vielzahl von Photonenerfassungszeiten definiert ist, wobei eine Modulo-Tiefenschätzung aus den Photonenerfassungszeiten innerhalb jeder Untererwerbung der Folge von Untererwerbungen erzeugt wird, um die Folge von Modulo-Distanzen zu dem Zielobjekt (108) zu schätzen;

wobei die Modulo-Tiefenschätzung durch Anwendung eines approximativen logarithmisch abgeglichenen Filters erfolgt

$$d_m = \arg \max_{t \in (0, t_r]} \sum_{\ell \in I_m} \log\left( \sum_{i=-\infty}^{\infty} s(W_\ell - t - it_r) \right),$$

wobei $I_m$ Indizes von Erfassungen in der $m$-ten Untererwerbung enthält, eine Zeit zwischen den Impulsen $t_r$, $W_\ell = T_\ell \bmod t_r$ ist, jedes von dem Einzelphotonendetektor (109) erfasste Photon mit einer absoluten Erfassungszeit zeitgestempelt ist, $T_\ell$ für $\ell = 0, \dots, N_d - 1$, $N_d$ die Gesamtzahl an erfassten Photonen bezeichnet, und $s(t)$ eine Form der Impulse bezeichnet; und

wobei die Folge von Modulo-Distanzen mit Hilfe des Algorithmus zum Entwrappen der Differenzphase erster Ordnung entwrappt wird:

$$
\begin{aligned}
&1: \text{set } j = 0, \tilde{u}_0 = 0, m = 1 \\
&2: \quad \textbf{while } m < n_f \textbf{ do} \\
&3: \qquad \Delta_m = d_m - d_{m-1} \\
&4: \qquad \textbf{if } |\Delta_m| > z_r/2 \\
&5: \qquad\qquad j = j - sign(\Delta_m) \\
&6: \qquad \textbf{endif} \\
&7: \qquad \tilde{u}_m = d_m + j z_r \\
&8: \qquad M = m + 1 \\
&9: \quad \textbf{end while}
\end{aligned}
$$

wobei $j$ eine ganzzahlige Verschiebung bezeichnet, $\tilde{u}_m$ eine entwrappte Messung bezeichnet, eine Zielbewegung über $n_f$ Untererwerbungen vernachlässigt ist, $z_r = ct_r/2$, und $c$ die Lichtgeschwindigkeit bezeichnet.

## Revendications

**1.** Système (100) de suivi de positions d'un objet cible (108), comprenant :

des circuits (102, 104, 106) configurés pour :

commander une source d'éclairage (107) pour émettre périodiquement des impulsions d'éclairage afin d'éclairer l'objet cible (108) ;

détecter l'éclairage réfléchi par l'objet cible (108) afin d'estimer une séquence de distances modulo par rapport à l'objet cible (108) enveloppée par une période de répétition d'impulsions ; et

dérouler la séquence de distances modulo soumise à une ou plusieurs contraintes de continuité pour produire une trajectoire continue de l'objet cible (108) ;

dans lequel les circuits (102, 104, 106, 109) comprennent un détecteur de photon unique (109) pour détecter l'éclairage réfléchi par l'objet cible (108) et générer dans un temps d'acquisition total des données brutes sous la forme d'une séquence d'horodatages de détection de photons ;

**caractérisé en ce que**

le temps d'acquisition total est divisé en une séquence de sous-acquisitions, chaque sous-acquisition de la séquence de sous-acquisitions étant définie par une pluralité de temps de détection de photons, dans lequel les circuits (102, 104, 106, 109) sont configurés pour produire une estimation de profondeur modulo à partir des temps de détection de photons dans chaque sous-acquisition de la séquence de sous-acquisitions afin d'estimer la séquence de distances modulo par rapport à l'objet cible (108) ;

dans lequel l'estimation de la profondeur modulo est réalisée en appliquant un filtre logarithmique approximatif,

$$d_m = \arg \max_{t \in (0, t_r]} \sum_{\ell \in I_m} \log \left( \sum_{i=-\infty}^{\infty} s(W_\ell - t - i t_r) \right),$$

où $I_m$ contient les indices des détections dans la $m^{\text{ième}}$ sous-acquisition, un temps entre les impulsions est $t_r$, $W_\ell = T_\ell \bmod t_r$, chaque photon détecté par le détecteur de photon unique (109) est horodaté avec un temps de détection absolu $T_\ell$ for $\ell = 0, \ldots, N_d - 1$, $N_d$ représente le nombre total de photons détectés, et $s(t)$ représente une forme des impulsions ; et

dans lequel la séquence de distances modulo est déroulée à l'aide de l'algorithme de déroulement de phase par différence du premier ordre :

$$
\begin{aligned}
&1: \text{set } j = 0, \tilde{u}_0 = 0, m = 1 \\
&2: \quad \textbf{while } m < n_f \textbf{ do} \\
&3: \qquad \Delta_m = d_m - d_{m-1} \\
&4: \qquad \textbf{if } |\Delta_m| > z_r/2 \\
&5: \qquad\qquad j = j - \text{sign}(\Delta_m) \\
&6: \qquad \textbf{endif} \\
&7: \qquad \tilde{u}_m = d_m + j z_r \\
&8: \qquad m = m + 1 \\
&9: \quad \textbf{end while}
\end{aligned}
$$
,

où $j$ représente un décalage entier, $\tilde{u}_m$ représente une mesure non déroulée, le mouvement de la cible est négligé sur $n_f$ sous-acquisitions, $z_r = c t_r / 2$, et $c$ représente la vitesse de la lumière.

**2.** Système (100) selon la revendication 1,

dans lequel la trajectoire continue de l'objet cible (108) définit un changement des distances de l'objet cible (108) par rapport à la source d'éclairage (107), et

dans lequel les circuits (102, 104, 106) sont en outre configurés pour déterminer un décalage pour décaler la trajectoire continue de l'objet cible (108) afin de produire une trajectoire décalée continue suivant les distances absolues de l'objet cible (108) par rapport à la source d'éclairage (107).

**3.** Système (100) selon la revendication 2, dans lequel les circuits (102, 104, 106) sont configurés pour déterminer le décalage à partir d'une connaissance préalable de la position absolue de l'objet cible (108) à un ou plusieurs moments de la trajectoire continue.

**4.** Système (100) selon la revendication 2, dans lequel les circuits (102, 104, 106) sont configurés pour déterminer le décalage en sélectionnant un décalage qui provoque une correspondance entre la trajectoire continue et un changement observé du fléchissement radial au cours de la trajectoire continue.

5. Système (100) selon la revendication 4, dans lequel les circuits (102, 104, 106) sont en outre configurés pour recueillir la connaissance préalable de la position absolue de l'objet cible (108) en tant que données complémentaires.

6. Procédé (150) de suivi de positions d'un objet cible, le procédé (150) comprenant :

la commande (152) d'une source d'éclairage pour émettre périodiquement des impulsions lumineuses afin d'éclairer l'objet cible ;
la détection (154) de l'éclairage réfléchi par l'objet cible afin d'estimer une séquence de distances modulo par rapport à l'objet cible enveloppée par une période de répétition d'impulsions ; et
le déroulement (156) de la séquence de distances modulo soumise à une ou plusieurs contraintes de continuité pour produire (158) une trajectoire continue de l'objet cible ;
dans lequel un détecteur de photon unique (109) est utilisé pour détecter l'éclairage réfléchi par l'objet cible (108) et générer dans un temps d'acquisition total des données brutes sous la forme d'une séquence d'horodatages de détection de photons ;
**caractérisé en ce que**
le temps d'acquisition total est divisé en une séquence de sous-acquisitions, chaque sous-acquisition de la séquence de sous-acquisitions étant définie par une pluralité de temps de détection de photons, dans lequel une estimation de profondeur modulo est produite à partir des temps de détection de photons dans chaque sous-acquisition de la séquence de sous-acquisitions afin d'estimer la séquence de distances modulo par rapport à l'objet cible (108) ;
dans lequel l'estimation de la profondeur modulo est réalisée en appliquant un filtre logarithmique approximatif,

$$d_m = \arg \max_{t \in (0, t_r]} \sum_{\ell \in I_m} \log \left( \sum_{i=-\infty}^{\infty} s(W_\ell - t - i t_r) \right),$$

où $I_m$ contient les indices des détections dans la $m^{\text{ième}}$ sous-acquisition, un temps entre les impulsions est $t_r$, $W_\ell = T_\ell \bmod t_r$, chaque photon détecté par le détecteur de photon unique (109) est horodaté avec un temps de détection absolu $T_\ell$ for $\ell = 0, \dots, N_d - 1$, $N_d$ représente le nombre total de photons détectés, et $s(t)$ représente une forme des impulsions ; et
dans lequel la séquence de distances modulo est déroulée à l'aide de l'algorithme de déroulement de phase par différence du

$$
\begin{aligned}
&1: \text{set } j = 0, \tilde{u}_0 = 0, m = 1 \\
&2: \quad \textbf{while } m < n_f \textbf{ do} \\
&3: \qquad \Delta_m = d_m - d_{m-1} \\
&4: \qquad \textbf{if } |\Delta_m| > z_r/2 \\
&5: \qquad\qquad j = j - \text{sign}(\Delta_m) \\
&6: \qquad \textbf{endif} \\
&7: \qquad \tilde{u}_m = d_m + j z_r \\
&8: \qquad m = m + 1 \\
&9: \quad \textbf{end while}
\end{aligned}
$$
,

premier ordre :
où $j$ représente un décalage entier, $\tilde{u}_m$, représente une mesure non déroulée, le mouvement de la cible est négligé sur $n_f$ sous-acquisitions, $z_r = c t_r/2$, , et $c$ représente la vitesse de la lumière.

7. Support non-transitoire lisible par ordinateur sur lequel sont stockées des instructions exécutables par un ordinateur pour l'exécution d'un procédé (150) de suivi de positions d'un objet cible, le procédé (150) comprenant :

la commande (152) d'une source d'éclairage pour émettre périodiquement des impulsions lumineuses afin d'éclairer l'objet cible ;

la détection (154) de l'éclairage réfléchi par l'objet cible afin d'estimer une séquence de distances modulo par rapport à l'objet cible enveloppée par une période de répétition d'impulsions ; et

le déroulement (156) de la séquence de distances modulo soumise à une ou plusieurs contraintes de continuité pour produire (158) une trajectoire continue de l'objet cible ;

dans lequel un détecteur de photon unique (109) est utilisé pour détecter l'éclairage réfléchi par l'objet cible (108) et générer dans un temps d'acquisition total des données brutes sous la forme d'une séquence d'horodatages de détection de photons ;

**caractérisé en ce que**

le temps d'acquisition total est divisé en une séquence de sous-acquisitions, chaque sous-acquisition de la séquence de sous-acquisitions étant définie par une pluralité de temps de détection de photons, dans lequel une estimation de profondeur modulo est produite à partir des temps de détection de photons dans chaque sous-acquisition de la séquence de sous-acquisitions afin d'estimer la séquence de distances modulo par rapport à l'objet cible (108) ;

dans lequel l'estimation de la profondeur modulo est réalisée en appliquant un filtre logarithmique approximatif,

$$d_m = \arg \max_{t \in (0, t_r]} \sum_{\ell \in I_m} \log \left( \sum_{i=-\infty}^{\infty} s(W_\ell - t - it_r) \right),$$

où $I_m$ contient les indices des détections dans la $m^{\text{ième}}$ sous-acquisition, un temps entre les impulsions est $t_r$, $W_\ell = T_\ell \bmod t_r$, chaque photon détecté par le détecteur de photon unique (109) est horodaté avec un temps de détection absolu $T_\ell$ for $\ell = 0, \dots, N_d - 1$, $N_d$ représente le nombre total de photons détectés, et $s(t)$ représente une forme des impulsions ; et

dans lequel la séquence de distances modulo est déroulée à l'aide de l'algorithme de déroulement de phase par différence du premier ordre :

$$
\begin{aligned}
&1: \text{set } j = 0, \tilde{u}_0 = 0, m = 1 \\
&2: \quad \textbf{while } m < n_f \textbf{ do} \\
&3: \qquad \Delta_m = d_m - d_{m-1} \\
&4: \qquad \textbf{if } |\Delta_m| > z_r/2 \\
&5: \qquad\qquad j = j - \text{sign}(\Delta_m) \\
&6: \qquad \textbf{endif} \\
&7: \qquad \tilde{u}_m = d_m + j z_r \\
&8: \qquad m = m + 1 \\
&9: \quad \textbf{end while}
\end{aligned}
$$
,

où $j$ représente un décalage entier, $\tilde{u}_m$ représente une mesure non déroulée, le mouvement de la cible est négligé sur $n_f$ sous-acquisitions, $z_r = ct_r/2$, , et c représente la vitesse de la lumière.

FIG.1A

Amplitude

Distance

$d_1$ $d_2$ $d_3$

101 103 105

0 100 200 0 100 200 0

FIG.1B

**FIG.1C**

150

Control an illumination source to periodically emit illumination pulses for illuminating the target — 152

Detect reflected illumination for estimating a sequence of modulo distances to the target wrapped by a pulse repetition period — 154

Unwrap the sequence of modulo distances subject to one or more continuity constraints — 156

Output a continuous trajectory of the target — 158

## FIG.2A

EP 4 646 611 B1

# FIG.2B

FIG.2C

FIG.3

# FIG.4A

FIG.4B

## FIG.4C

FIG.4D

FIG.5A

## FIG.5B

EP 4 646 611 B1

FIG.5C

550

**Algorithm 1** Depth estimation using union-of-subspaces model

**Input:** $y, A, \varepsilon$
**Output:** $x^{(k)}$
1: initialize $x^{(0)} \leftarrow 0, u \leftarrow y, k \leftarrow 0$
2:    **repeat**
3:        $k \leftarrow k + 1$
4:        $\hat{x} \leftarrow A^T u$
5:        $\Omega \leftarrow \mathrm{supp}\left((\hat{x}_{1:N})_{[1]}\right) \cup \mathrm{supp}\left(x_{1:N}^{(k-1)}\right) \cup \{N+1\}$
6:        $b|_{\Omega} \leftarrow A_{\Omega}^{\dagger} y$
7:        $b|_{\Omega^c} \leftarrow 0$
8:        $x^{(k)} \leftarrow \mathcal{T}_0\left(\left[(b_{1:N})_{[1]}^T, b_{N+1}\right]^T\right)$
9:        $u \leftarrow y - Ax^{(k)}$
10:   **until** $\left\| x^{(k-1)} - x^{(k)} \right\|_2^2 < \varepsilon$

EP 4 646 611 B1

# FIG.6

600 ↘

## Algorithm 2 First-order difference phase unwrapping

**Input:** modulo depth measurements $\{d_m\}_{m=1}^{n_f}$, $z_r$

**Output:** unwrapped depth measurements $\{\tilde{u}_m\}_{m=1}^{n_f}$

1: set $j = 0$, $\tilde{u}_0 = 0$, $m = 1$

2: **while** $m < n_f$ **do**

3: $\qquad \Delta_m = d_m - d_{m-1}$

4: $\qquad$ **if** $|\Delta_m| > z_r/2$

5: $\qquad\qquad j = j - \text{sign}(\Delta_m)$

6: $\qquad$ **endif**

7: $\qquad \tilde{u}_m = d_m + j z_r$

8: $\qquad m = m + 1$

9: **end while**

EP 4 646 611 B1

# FIG.7

700

**Algorithm 3** Lasso-B$^2$R$^2$ unwrapping

1: **Input:** $d(m), z_r, \rho, \varepsilon,$ maxIter
2: Compute $N$
3: Construct partial DFT matrix $V$
4: Compute $\widehat{F}_d\left(e^{\frac{j2\pi k}{N}}\right) \forall k \in \mathbb{Z}, \frac{2\pi k}{N} \in (\rho\pi, 2\pi - \rho\pi)$
5: **Initialize:** $\gamma = 0.1\|V^H \widehat{F}_d\|_\infty, \tau = \frac{1}{\|V\|_2^2}, \hat{r}^{(0)} \in \mathcal{N}(0,1)$
6: **for** $i = 0$: maxIter **do**
7: $\quad \hat{r}^{(i+1)} = S_{\gamma\tau}\left(\hat{r}^{(i)} - \tau V^H\left(V\hat{r}^{(i)} - \widehat{F}_d\right)\right)$
8: $\quad$ **if** $\left\|\hat{r}^{(i+1)} - \hat{r}^{(i)}\right\|_2 < \varepsilon$ **then**
9: $\quad\quad\quad \hat{r} = \hat{r}^{(i+1)}$
10: $\quad$ **end if**
11: **end for**
12: $\hat{r} \leftarrow z_r\lfloor\hat{r}/z_r\rfloor$
13: $\hat{r} \leftarrow$ cumsum$(\hat{r})$
14: $u(m) \leftarrow d(m) - r(m)$
15: **Output:** $u(m)$

EP 4 646 611 B1

# FIG.8

800 ↘

**Algorithm 4** Extended Kalman filter unwrapping

**Input:** modulo depth measurements $\{d_m\}_{m=1}^{n_f}$, $z_r$, $\beta$, $\sigma_a$, $\sigma_r$

**Output:** unwrapped depth measurements $\{\hat{z}_{m|m}\}_{m=1}^{n_f}$

1: **for** $m = 1$ to $n_f$:

2: $\quad \delta_m = t_{m+1} - t_m$

3: $\quad F_m = \Phi(\delta_{m-1}, \beta)$

4: $\quad$ Predict:

5: $\quad\quad \hat{x}_{m|m-1} = F_m \hat{x}_{m-1|m-1}$

6: $\quad\quad P_{m|m-1} = F_m P_{m-1|m-1} F_m^T + Q_m(\theta, \delta_m)$

7: $\quad$ Update:

8: $\quad\quad H_m = \dfrac{2\pi}{z_r} \begin{bmatrix} -\sin\left(\frac{2\pi \hat{z}_{m|m-1}}{z_r}\right) & 0 & 0 \\ \cos\left(\frac{2\pi \hat{z}_{m|m-1}}{z_r}\right) & 0 & 0 \end{bmatrix}$

9: $\quad\quad J_m = \dfrac{2\pi}{z_r} \begin{bmatrix} -\sin\left(\frac{2\pi \hat{z}_{m|m-1}}{z_r}\right) \\ \cos\left(\frac{2\pi \hat{z}_{m|m-1}}{z_r}\right) \end{bmatrix}$

10: $\quad\quad b_m = \begin{cases} [1,0]^T, & \text{if } \left|\cos\left(\frac{2\pi \hat{z}_{m|m-1}}{z_r}\right)\right| < \left|\sin\left(\frac{2\pi \hat{z}_{m|m-1}}{z_r}\right)\right| \\ [0,1], & \text{otherwise} \end{cases}$

11: $\quad\quad \varepsilon_m = b_m^T\left(d_m - h(\hat{z}_{m|m-1})\right)$

12: $\quad\quad s_m = (b_m H_m) P_{m|m-1}(b_m H_m)^T + \sigma_r^2 (b_m J_m)(b_m J_m)^T$

13: $\quad\quad K_m = P_{m|m-1}(b_m H_m)^T / s_m$

14: $\quad\quad \hat{x}_{m|m} = \hat{x}_{m|m-1} + \varepsilon_m K_m$

15: $\quad\quad P_{m|m} = \left(I - K_m(b_m H_k)\right) P_{m|m-1}$

16: **end for**

# FIG.9

External Sensors 904

Machine 902

I /O Devices 941

Other Computers 942

External sensing devices 944

911

Power Source 954

Input Interface 908

Receiver 946

External Receiver 938

Processor 940

External Transmitter 939

Memory 912

Output Interface 909

Transmitter 947

Storage 958

956

HMI (User Interface) 949

NIC 934

Network 936

User Input Interface 957

Keyboard 951

Display 952

Display 948

Keyboard 953

EP 4 646 611 B1

FIG.10

→ Transmitted pulse

-·-▶ Reflected pulse

1008

1006

1004

1002

44

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020284908 A1

- US 2017329013 A1

**Non-patent literature cited in the description**

- Direct Time-of-Flight Single-Photon Imaging. **GYONGY ISTVAN et al.** IEEE TRANSACTIONS ON ELECTRON DEVICES. IEEE, 14 December 2021, vol. 69, 2794-2805

- Tracking Beyond the Unambiguous Range with Modulo Single-Photon Lidar. **FERNANDEZ-MEN-DUINA S et al.** ICASSP 2024 - 2024 IEEE INTERNATIONAL CONFERENCE ON ACOUSTICS, SPEECH AND SIGNAL PROCESSING (ICASSP). IEEE, 14 April 2024, 6-10